# EUROPÄISCHE PATENTSCHRIFT

(11) **EP 2 441 672 B1**
(45) Veröffentlichungstag und Bekanntmachung des Hinweises auf die Patenterteilung: **03.04.2013**
(21) Anmeldenummer: 10187953.4
(22) Anmeldetag: 18.10.2010
(51) Int. Cl.: B64D 11/06, B64D 9/00, B60N 2/015

(54) **Vorrichtung zum Befestigen eines Ausstattungsgegenstands an einer Befestigungsstruktur eines Fahrzeugs**
Device for attaching a fitting to a fixing structure of a vehicle
Dispositif de fixation d'un objet d'équipement sur une structure de fixation d'un véhicule

(43) Veröffentlichungstag der Anmeldung: 18.04.2012
(73) Patentinhaber: Diehl Service Modules GmbH, 22453 Hamburg (DE)
(72) Erfinder: Grünewald, Rolf, 24537, Neumünster (DE)
(74) Vertreter: Riepl, Hubert Johann

(56) Entgegenhaltungen:
- DE-U1- 29 712 180
- FR-A1- 2 893 996
- GB-A- 2 406 877
- US-A- 5 489 172
- US-A1- 2010 074 680
- US-B1- 6 902 365

## Beschreibung

Die Erfindung betrifft eine Vorrichtung zum Befestigen eines Behälters, Sitzes, einer Trennwand oder dergleichen Ausstattungsgegenstands an einer Befestigungsstruktur eines Fahrzeugs, vorzugsweise eines Luftfahrzeugs. Insbesondere betrifft sie eine Befestigungsvorrichtung zum Befestigen eines Ausstattungsgegenstands im Innenraum eines Fahrzeugs, beispielsweise in einer Passagierkabine oder im Cockpit eines Passagierflugzeugs. Die Erfindung betrifft aber auch Vorrichtungen für die Befestigung in oder grundsätzlich auch außen an Fahrzeugen anderer Art, beispielsweise Schienenfahrzeugen wie etwa der Beförderung von Personen oder Waren dienenden Waggons, Bussen und Straßennutzfahrzeugen.

Um Flugzeuge an unterschiedliche Passagier- oder Nutzlastanforderungen flexibel anpassen zu können, sei es für eine Neuausstattung oder eine Umrüstung, sind Befestigungsvorrichtungen aus beispielsweise der US 6,902,365 B 1, US 2010/074680 A1, FR 2 893 996 A1, US 5,489,172 A1, GB 2 406 877 A, DE 297 12 180 U1 und US 7,021,596 B2 bekannt. Die Vorrichtungen bauen auf standardisierten Befestigungsstrukturen auf, wie sie in Böden von Flugzeugkabinen vorhanden sind. Vorgeschlagen werden Befestigungsvorrichtungen, die zusammenwirkende Klemmbacken aufweisen, um den jeweiligen Ausstattungsgegenstand wie etwa einen Passagiersitz oder Container an der Befestigungsstruktur sicher zu fixieren.

Angesichts der bekannten Befestigungsmechanismen ist es eine Aufgabe der Erfindung, eine Befestigungsvorrichtung zu schaffen, die mechanisch robust, einfach bedienbar und platzsparend ist, vorzugsweise ein geringes Gewicht aufweist, und das Befestigen des jeweiligen Ausstattungsgegenstands in kurzer Zeit erlaubt.

Die Erfindung geht von einer Vorrichtung zum Befestigen eines Ausstattungsgegenstands an einer Befestigungsstruktur eines Fahrzeugs wie etwa eines Flugzeugs oder eines Eisenbahnwaggons aus, die einen in einer Längsrichtung erstreckten Befestigungskanal aufweist, der sich über einen in Längsrichtung erstreckten Schlitz nach außen öffnet. Der Schlitz weist in Längsrichtung abwechselnd breitere und demgegenüber engere Schlitzabschnitte auf. Der Befestigungskanal weitet sich von außen gesehen zumindest hinter jeweils den engeren Schlitzabschnitten auf, so dass in den engeren Schlitzabschnitte jeweils eine von außen hintergreifbare Kanalwand vorhanden ist. Die Befestigungsstruktur kann den im Flugzeugbau bekannten entsprechen, wie sie auch im genannten Stand der Technik beschrieben werden.

Die Vorrichtung ist in einer Klemmrichtung gesehen über der Befestigungsstruktur positionierbar und umfasst eine Basis mit einer im positionierten Zustand in die Klemmrichtung zur Befestigungsstruktur drückbaren ersten Klemmbacke und eine mit der ersten Klemmbacke zusammenwirkende zweite Klemmbacke. Die Klemmbacken sind dafür eingerichtet, die Befestigungsstruktur in Klemmrichtung einzuklemmen. Die erste Klemmbacke kann hierbei mit der Befestigungsstruktur unmittelbar in einem Klemmeingriff sein, also unmittelbar gegen die Befestigungsstruktur drücken, oder aber in Klemmrichtung gesehen erst über eine oder mehrere Zwischenstruktur(en) indirekt gegen die Befestigungsstruktur drücken. Ein direkter Kontakt wird bevorzugt. Die erste Klemmbacke kann für die klemmende Befestigung relativ zur Basis beweglich sein, in bevorzugten Ausführungen ist sie jedoch mit der Basis unbeweglich verbunden und kann grundsätzlich auch mit dieser in einem Stück geformt sein, obgleich sie bevorzugter mit der Basis gefügt ist, besonders bevorzugt lösbar, so dass ihre Position relativ zur Basis verstellt werden kann.

Die zweite Klemmbacke weist einen Klemmabschnitt und einen vom Klemmabschnitt gegen die Klemmrichtung abragenden Schaft auf. Der Klemmabschnitt ist schmaler, vorzugsweise nur geringfügig schmaler als der Schlitz im Bereich der breiteren Schlitzabschnitte, aber breiter als der Schlitz im Bereich der engeren Schlitzabschnitte. Er ist durch einen oder mehrere der breiteren Schlitzabschnitte in den Befestigungskanal einführbar. Der Schaft ist so schlank, dass die zweite Klemmbacke bei eingeführtem, im Befestigungskanal befindlichem Klemmabschnitt in Längsrichtung versetzt und der Klemmabschnitt dadurch in eine Überlappung mit einem oder mehreren der engeren Schlitzabschnitte bewegt werden kann. Der Klemmabschnitt erstreckt sich in einfachen Ausführungen nur über die Länge eines einzigen der breiteren Schlitzabschnitte. In Weiterentwicklungen ist der Klemmabschnitt in mehrere in Längsrichtung nebeneinander angeordnete und voneinander beabstandete breitere Längsabschnitte unterteilt, die jeweils an die breiteren Schlitzabschnitte angepasst geformt sind. Der so unterteilte Klemmabschnitt kann durch gleichzeitig wenigstens zwei breitere Schlitzabschnitte und einen dazwischen liegenden engeren Schlitzabschnitt in den Befestigungskanal eingeführt werden. Die breiteren Längsabschnitte können über einen oder mehrere schmalere Verbindungsabschnitte miteinander verbunden oder in Längsrichtung voneinander separiert sein. Die zweite Klemmbacke ist an der Basis in Längsrichtung hin und her beweglich abgestützt, so dass sie nach dem Einführen in den Befestigungskanal während oder nach Ausführung einer Längsbewegung mit ihrem Klemmabschnitt gegen die hintergreifbare Kanalwand des Befestigungskanals gedrückt werden kann, um die Befestigungsstruktur zwischen den Klemmbacken zu klemmen und die Basis dadurch an der Befestigungsstruktur zu befestigen. In Ausführungen, in denen die zweite Klemmbacke bereits während der Ausführung der Längsbewegung, also aufgrund der Längsbewegung, in Klemmkontakt mit der Befestigungsstruktur gelangt, kann dies durch eine entsprechende Form des Klemmabschnitts erreicht werden, beispielsweise dadurch, dass sich der Klemmabschnitt an einem in Längsrichtung vorlaufenden Ende in Bewegungsrichtung verjüngt, so dass sich die zweite Klemmbacke im Verlaufe der Längsbewegung am vorlaufenden Ende an die hintergreifbare Kanalwand des nächsten engeren Schlitzabschnitts in der Art eines Keils andrückt. In bevorzugten Ausführungen sind die Längsbewegung und das Klemmen aber so gesteuert, dass die Klemmbewegung der einen Klemmbacke in Richtung auf die andere frühestens dann einsetzt, wenn die zweite Klemmbacke wenigstens ein Teil ihres Längshubs bereits ausgeführt hat und wenigstens eine teilweise Überlappung mit einem der engeren Schlitzabschnitte besteht. Noch bevorzugter sind die Längsbewegung und die Klemmhubbewegung vollständig voneinander separiert, und finden sequentiell nacheinander statt.

Die erste oder die zweite Klemmbacke ist oder sind relativ zur Basis in und gegen die Klemmrichtung beweglich, um für das Klemmen einen Klemmhub ausführen zu können. Das Wort "oder" wird hier wie auch stets sonst im Sinne der Erfindung als "inklusiv oder" verstanden, umfasst also die Bedeutung von "entweder ... oder" und auch die Bedeutung von "und", falls sich aus dem jeweils konkreten Zusammenhang nicht ausschließlich nur eine einzige dieser beiden Bedeutungen ergeben kann. Obgleich für den Klemmhub die erste Klemmbacke in Klemmrichtung beweglich an der Basis abgestützt sein kann, wird es bevorzugt, wenn die zweite Klemmbacke auch die Klemmhubbewegung relativ zur Basis ausführt, vorzugsweise nur die zweite Klemmbacke. In derartigen Ausführungen ist die zweite Klemmbacke relativ zur Basis nicht nur in Längsrichtung des Befestigungskanals, sondern auch in und gegen die Klemmrichtung beweglich. Die beiden Bewegungen sind wie gesagt in bevorzugten Ausführungen voneinander separiert, sie finden sequentiell statt, grundsätzlich können sie jedoch auch einander überlagert, also mit zeitlicher Überlappung, stattfinden. Die erste Klemmbacke kann zumindest soweit der Klemmeingriff betroffen ist relativ zur Basis unbeweglich sein.

Die Vorrichtung umfasst ferner ein an der Basis hin und her beweglich abgestütztes Betätigungsorgan. Das Betätigungsorgan kann für eine motorische Betätigung oder eine Betätigung mit Werkzeug eingerichtet sein, in bevorzugten Ausführungen ist es für eine Bedienung per Hand, ohne Werkzeug, eingerichtet und umfasst in derartigen Ausführungen einen Handgriff. Ein Handgriff kann das Betätigungsorgan bereits alleine bilden.

Das Betätigungsorgan ist mit der zweiten Klemmbacke mittels eines Getriebes gekoppelt. Das Getriebe umfasst ein erstes Getriebeglied und ein zweites Getriebeglied, von denen eines eine Führungskurve aufweist und das andere mit der Führungskurve in einem Führungseingriff als Eingriffsglied zusammenwirkt. Die Getriebeglieder bilden im Führungseingriff vorzugsweise ein ebenes Kurvengelenk. Die Getriebeglieder sind im Führungseingriff relativ zueinander und jeweils zur Basis translatorisch hin und her beweglich Die Bewegung des Betätigungsorgans bewirkt über den Führungseingriff die Längsbewegung der zweiten Klemmbacke. Die Führungskurve und der Führungseingriff werden im folgenden daher auch als Längsführungskurve und Längsführungseingriff bezeichnet. In der Übertragungsstrecke vom Betätigungsorgan zur zweiten Klemmbacke werden Bewegungen des Betätigungsorgans über ein oder mehrere Zwischenglieder oder vorzugsweise unmittelbar auf das erste Getriebeglied, von diesem im Längsführungseingriff auf das zweite Getriebeglied und dessen Bewegung über ein oder mehrere Zwischenglieder oder vorzugsweise direkt auf die zweite Klemmbacke übertragen. Aufgrund der translatorischen Beweglichkeit der Getriebeglieder relativ zueinander und jeweils zur Basis kann die Bewegungs- und Kraftübertragung besonders robust und auch kompakt auf engem Raum verwirklicht werden. Der Robustheit und Kompaktheit kommt es ferner entgegen, wenn das Betätigungsorgan direkt und starr auf das erste Getriebeglied oder das zweite Getriebeglied direkt und starr auf die zweite Klemmbacke wirkt. In einer ersten Variante ist nur eine direkte Übertragung der Bewegung und Kraft des Betätigungsorgans, 1:1, auf das erste Getriebeglied, in einer zweiten Variante ist eine direkte Übertragung, 1:1, nur zwischen dem zweiten Getriebeglied und der zweiten Klemmbacke und in einer bevorzugten dritten Variante ist die Übertragung sowohl vom Betätigungsorgan auf das erste Getriebeglied als auch die Übertragung vom zweiten Getriebeglied auf die zweite Klemmbacke direkt und starr. Betätigungsorgan und erstes Getriebeglied einerseits und zweites Getriebeglied und zweite Klemmbacke andererseits sind den drei bevorzugten Varianten gemäß jeweils paarweise relativ zueinander unbeweglich miteinander verbunden, entweder miteinander gefügt oder in einem Stück geformt.

Die translatorische Bewegung des ersten Getriebeglieds bewirkt im Längsführungseingriff eine relativ zur Basis vorzugsweise nur translatorische Bewegung des zweiten Getriebeglieds. Bevorzugt sind die Getriebeglieder relativ zur Basis ausschließlich translatorisch beweglich. Von Vorteil ist, wenn sie nur linear beweglich sind, eine translatorische Bewegung ohne Rotation längs einer gebogenen Bahn kann jedoch stattdessen realisiert sein. In bevorzugten Ausführungen hat das erste Getriebeglied relativ zur Basis nur einen einzigen Freiheitsgrad der Bewegung längs einer Bewegungsachse. Die Bewegungsachse kann insbesondere quer zur Klemmrichtung und Längsrichtung weisen.

Das Betätigungsorgan ist in bevorzugten Ausführungsformen an der Basis translatorisch, vorzugsweise nur translatorisch hin und her beweglich abgestützt. Es kann insbesondere quer zur Längsrichtung oder der Klemmrichtung beweglich sein. Vorteilhafterweise ist das Betätigungsorgan relativ zur Basis nur linear und noch vorteilhafter nur längs einer Bewegungsachse translatorisch beweglich. Für die Robustheit und Kompaktheit ist es von Vorteil, wenn das Betätigungsorgan in Bezug auf seine translatorische Beweglichkeit mit dem ersten Getriebeglied zug- und schubfest verbunden ist. Translationen des Betätigungsorgans werden in derartigen Ausführungen 1:1 auf das erste Getriebeglied übertragen, das erste Getriebeglied macht die Bewegungen des Betätigungsorgans einfach mit.

Insbesondere kann die zweite Klemmbacke selbst das zweite Getriebeglied bilden. Im Sinne einer kompakten und mechanisch robusten Ausführung ist es von Vorteil, wenn der Schaft der zweiten Klemmbacke in und gegen die Klemmrichtung über die Längsführungskurve hinausragt und der unter Ausbildung des zweiten Getriebeglieds mit der Längsführungskurve im Längsführungseingriff ist.

Von Vorteil ist, wenn eine der Klemmbacken relativ zur anderen und relativ zur Basis in und gegen die Klemmrichtung beweglich ist, um die Befestigungsstruktur zwischen den Klemmbacken zu klemmen. Die Relativbeweglichkeit in Klemmrichtung zusätzlich zur Beweglichkeit der gleichen Klemmbacke oder gegebenenfalls der anderen Klemmbacke kommt vorteilhafterweise in Kombination mit einer Sequenzsteuerung zum Einsatz, derart, dass in einer ersten Bewegungsphase nach dem Einführen in den Befestigungskanal der Klemmabschnitt der zweiten Klemmbacke in Längsrichtung in die Überlappung mit wenigstens einem der engeren Schlitzabschnitte bewegt und erst danach, in einer zweiten Bewegungsphase, die Klemmbewegung gegen die Kanalwand ausgeführt wird. Die beiden Bewegungen sind vorzugsweise wenigstens so weit separiert, dass die zweite Klemmbacke ihre Längsbewegung beendet hat, bevor sie in der zweiten Bewegungsphase in Klemmkontakt mit der Kanalwand gelangt.

Das Getriebe weist vorzugsweise eine weitere Führungskurve und ein Eingriffsglied auf, das mit der weiteren Führungskurve in einem weiteren Führungseingriff zusammenwirkt. In dem weiteren Führungseingriff wird eine hin- und hergehende Bewegung des Betätigungsorgans in die in oder gegen die Klemmrichtung gerichtete Klemmbewegung der entsprechend beweglichen Klemmbacke, vorzugsweise der zweiten Klemmbacke, umgewandelt. Die weitere Führungskurve und der weitere Führungseingriff werden dementsprechend im folgenden auch als Klemmführungskurve und Klemmführungseingriff bezeichnet. Die Klemmführungskurve weist eine Neigung größer 0° und kleiner 90° zur Klemmrichtung und auch eine Neigung größer 0° und kleiner 90° zu einer Richtung der hin- und hergehenden Bewegung des Betätigungsorgans auf. Die Klemmführungskurve ist somit unter einem spitzen Winkel zur Klemmrichtung und zur Bewegungsrichtung des Betätigungsorgans geneigt, wobei die Neigung relativ zur Klemmrichtung zweckmäßigerweise näher bei 90° und die Neigung relativ zur Bewegungsrichtung des Betätigungsorgans näher bei 0° liegt. Die Klemmführungskurve kann insbesondere als eine Schräge, also gerade Rampe geformt sein, grundsätzlich kann sie aber auch bogenförmig verlaufen, entweder über ihre gesamte Länge oder auch nur abschnittsweise. Sie kann zum Ende des Klemmhubs beispielsweise abgeflacht sein, um eine besonders hohe Klemmkraft erzielen zu können.

Die Klemmführungskurve kann an der Basis oder der ersten Klemmbacke oder an einem optionalen weiteren Getriebeglied geformt sein. Bevorzugter weist eines der Getriebeglieder, die miteinander in dem Längsführungseingriff sind, auch die Klemmführungskurve auf. Hierbei werden Ausführungen bevorzugt, in denen das erste Getriebeglied die Klemmführungskurve aufweist.

Falls das erste Getriebeglied die Klemmführungskurve nicht aufweist, kann es das mit der Klemmführungskurve zusammenwirkende Eingriffsglied bilden. Vorteilhafterweise umfasst das Getriebe aber ein weiteres, drittes Getriebeglied, das mit der Klemmführungskurve im Klemmführungseingriff zusammenwirkt und das Eingriffsglied dieses weiteren Kurvengetriebes bildet. Das dritte Getriebeglied ist in bevorzugten Ausführungen in Bezug auf die Klemmrichtung unbeweglich mit der zweiten Klemmbacke verbunden, bevorzugt ist es relativ zur zweiten Klemmbacke absolut unbeweglich. Es kann mit der zweiten Klemmbacke in einem Stück geformt sein, bevorzugter ist es mit dieser gefügt.

Der Kompaktheit förderlich ist es, wenn das erste Getriebeglied plattenförmig mit einer in Klemmrichtung gemessenen geringen Plattendicke im Millimeter- oder Submillimeterbereich ist. Bevorzugt werden Dicken von weniger als 20 mm, wobei Dicken von 10 mm oder mehr vorzugsweise allenfalls dann auftreten, wenn das erste Getriebeglied die Klemmführungskurve aufweist.

Falls das erste Getriebeglied wie bevorzugt die Längsführungskurve aufweist, kann diese Führungskurve vorteilhafterweise in einem Durchgang des ersten Getriebeglieds und dort von einer Seitenwand gebildet werden.

Falls das erste Getriebeglied wie bevorzugt die Klemmführungskurve aufweist, kann diese insbesondere an einer vom Klemmabschnitt der zweiten Klemmbacke abgewandten, gegen die Klemmrichtung weisenden Rückseite des ersten Getriebeglieds angeordnet sein. Eine Anordnung an der Unterseite, die in Klemmrichtung der ersten Klemmbacke weist, kann aber stattdessen ebenfalls verwirklicht sein. Das erste Getriebeglied würde in solch einer Ausführung beispielsweise mit einer Rückseite der Basis oder der ersten Klemmbacke im Klemmführungseingriff sein. So könnte es die erste Klemmbacke in Klemmrichtung drücken, falls diese in Klemmrichtung beweglich an der Basis abgestützt sein sollte, oder es könnte im Klemmführungsangriff gegen die Klemmrichtung bewegt werden und dabei die zweite Klemmbacke mitnehmen, um sie gegen die Kanalwand zu drücken. Bevorzugt ist das erste Getriebeglied aber relativ zur Basis in Klemmrichtung nicht beweglich, sondern bewirkt durch eine Bewegung in einer einzigen Ebene, vorzugsweise längs nur einer einzigen Achse, im Klemmführungseingriff einen Klemmhub der zweiten Klemmbacke.

Das erste Getriebeglied ist vorzugsweise an einer vom Klemmabschnitt der zweiten Klemmbacke abgewandten Rückseite der Basis oder einer damit zumindest in Klemmrichtung unbeweglich, vorzugsweise in Bezug auf jede Richtung unbeweglich verbundenen Komponente, hin und her beweglich abgestützt, vorzugsweise hin und her gleitbeweglich. Einer kompakten Bauweise kommt es entgegen, wenn das erste Getriebeglied auf der Rückseite der ersten Klemmbacke hin und her beweglich abgestützt ist. Im Klemmeingriff der ersten und zweiten Klemmbacke wird das erste Getriebeglied in derartigen Ausführungen in Klemmrichtung Z gegen die erste Klemmbacke gedrückt und diese hierdurch in Richtung auf die Befestigungsstruktur, vorzugsweise unmittelbar gegen die Befestigungsstruktur gedrückt. Der Kompaktheit kommt es entgegen, wenn die zweite Klemmbacke mit ihrem Schaft die erste Klemmbacke und das erste Getriebeglied durchgreift oder seitlich umgreift, entweder an nur einer einzigen Seite oder an zwei einander gegenüberliegenden Seiten, und mittels des dritten Getriebeglieds gegen die vom Klemmabschnitt der zweiten Klemmbacke abgewandte Rückseite des ersten Getriebeglieds drückt, vorteilhafterweise im Klemmführungseingriff Die Basis, vorzugsweise die erste Klemmbacke, kann eine Querführung für das erste Getriebeglied bilden, um dieses bei seiner bevorzugt nur hin- und hergehenden Bewegung linear zu führen. Das Wort "quer" bezeichnet hier eine Richtung quer zu einer Bewegungsrichtung des ersten Getriebeglieds.

In einer Weiterbildung ist die erste Klemmbacke relativ zur Basis in Längsrichtung verstellbar. Bei einer Längsverstellung der Position kann der an der Befestigungsstruktur zu befestigende Ausstattungsgegenstand in Längsrichtung der Befestigungsstruktur verstellt, dessen Position also justiert werden. Hierdurch kann die Position insbesondere innerhalb des Abstands verstellt werden, den zwei einander nächst benachbarte breitere Schnittabschnitte der Befestigungsstruktur voneinander aufweisen. Die Längsverstellung ist vorteilhafterweise auch im an der Befestigungsstruktur befestigten Zustand möglich. Die erste Klemmbacke ist für die Längsverstellung an der Basis vorteilhafterweise in Längsrichtung linear geführt. Für die Verstellung der Längsposition umfasst die Befestigungsvorrichtung in bevorzugten Ausführungen ein Verstellgetriebe mit einem an der Basis unbeweglich oder vorzugsweise beweglich angeordneten ersten Verstellglied und einem an der ersten Klemmbacke beweglich oder vorzugsweise unbeweglich angeordneten, beispielsweise geformten oder mit der ersten Klemmbacke gefügten zweiten Verstellglied, die miteinander in einem die Verstellung bewirkenden Verstelleingriff sind. Das Verstellgetriebe kann insbesondere ein Zahnradgetriebe sein. So kann eines der Verstellglieder ein drehbares Zahnrad und das andere eine damit im Zahneingriff befindliche, in Längsrichtung erstreckte Zahnstange sein.

Die erste Klemmbacke weist vorteilhafterweise eine oder mehrere Eingriffsform(en) auf, die breiter als jeweils die engeren Schlitzabschnitte und in einen die breiteren Schlitzabschnitte einführbar ist oder sind, um die erste Klemmbacke an der Befestigungsstruktur in Längsrichtung formschlüssig zu fixieren, wenn die Befestigungsvorrichtung relativ zur Befestigungsstruktur positioniert wird. Die Eingriffsform oder die mehreren Eingriffsformen kann oder können als Abragung(en) an einer der Befestigungsstruktur zugewandten Unterseite der zweiten Klemmbacke geformt sein. Vorteilhafterweise ist oder sind die Eingriffsform(en) an die breiteren Schlitzabschnitte angepasst geformt, so dass im positionierten Zustand ein wackelfreier oder nahezu wackelfreier Sitz im Schlitz gewährleistet ist.

Weist die Vorrichtung wie bevorzugt linke und rechte Klemmbacken auf, nämlich wenigstens eine linke erste und eine damit zusammenwirkende linke zweite Klemmbacke und wenigstens eine rechte erste und eine damit zusammenwirkende rechte zweite Klemmbacke, um den Ausstattungsgegenstand an einer linken Befestigungsstruktur und einer im Abstand daneben erstreckten rechten Befestigungsstruktur zu befestigen, so gelten die Ausführungen zur Befestigungsvorrichtung und auch die in den Ansprüchen offenbarten Merkmale vorzugsweise sowohl für die linken als auch für die rechten Klemmbacken, wenn nicht speziell auf Unterschiede hingewiesen wird. Die Basis ist vorzugsweise eine für die linke Befestigungsvorrichtung und die rechte Befestigungsvorrichtung gemeinsame Basis. Die ersten Klemmbacken und auch die zweiten Klemmbacken können links und rechts insbesondere gleich sein, unumgänglich erforderlich ist dies jedoch nicht. Das Gleiche gilt für das jeweilige Getriebe, falls die linke Befestigungsvorrichtung und die rechte Befestigungsvorrichtung wie bevorzugt jeweils ein Getriebe für die Übertragung der Bewegungen eines Betätigungsorgans aufweisen.

Die linke und die rechte Befestigungsvorrichtung können voneinander nicht nur räumlich, sondern auch funktional getrennt und dementsprechend mittels jeweils eines zugeordneten eigenen Betätigungsorgans betätigbar sein. Um die Rüst- oder Umrüstzeit beim Einbau, Wechsel oder einer Verlagerung des an der Befestigungsstruktur zu befestigenden Ausstattungsgegenstands zu verkürzen, sind die linke und die rechte Befestigungsvorrichtung in bevorzugten Ausführungen allerdings miteinander gekoppelt und durch Bedienung des in derartigen Ausführungen vorteilhafterweise gemeinsamen Betätigungsorgans gemeinsam betätigbar. In den bevorzugten Ausführungen weist eine aus der linken und der rechten Befestigungsvorrichtung zusammengesetzte Befestigungsvorrichtung eine Kopplungseinrichtung mit wenigstens einem Kopplungsglied auf, das relativ zu der Basis hin und her beweglich ist. Die Kopplungseinrichtung koppelt mittels des Kopplungsglieds die zweiten Klemmbacken miteinander, vorzugsweise über ein linkes Getriebe und ein rechtes Getriebe der erläuterten oder in den Ansprüchen offenbarten Art, so dass die zweiten Klemmbacken bei einer hin- und hergehenden Bewegung des Kopplungsglieds jeweils ihre hin- und hergehende Längsbewegung ausführen, vorzugsweise synchron gleichzeitig.

Die Bewegungen des wenigstens einen Kopplungsglieds sind vorzugsweise nur Translationsbewegungen, ohne Rotation, so dass in der Kopplung keine Drehmomente übertragen werden müssen. In bevorzugten Ausführungen ist das Kopplungsglied so gelagert oder in der Kopplungsstrecke zwischen der linken und der rechten Befestigungsvorrichtung eingebaut, dass es nur translatorisch beweglich ist. Vorteilhafterweise ist es nur linear beweglich. Von Vorteil ist, wenn das Kopplungsglied in eine Querrichtung, die quer sowohl zur Klemmrichtung als auch zur Längsrichtung weist, beweglich ist. Die Querrichtung kann insbesondere sowohl zur Klemmrichtung als auch zur Längsrichtung orthogonal sein. Die Kopplungseinrichtung kann mehrere Kopplungsglieder aufweisen, die zum Zwecke der Kopplung bzw. bei der Übertragung der Bewegungen des Betätigungsorgans relativ zueinander beweglich sind. Bevorzugter weist die Kopplungseinrichtung jedoch nur ein einziges Kopplungsglied auf. Eine zug- und schubsteife Kopplung wird bevorzugt.

Die Kopplungseinrichtung ist vorzugsweise als ein Gestänge gebildet. So kann das genannte Kopplungsglied insbesondere stangenförmig sein. Um die zusammengesetzte Befestigungsvorrichtung auf unterschiedliche Abstände zwischen der linken und rechten Befestigungsvorrichtung einstellen zu können, kann die in Abstandsrichtung der beiden Befestigungsstrukturen gemessene Länge des Kupplungsgliedes verstellbar sein. So kann das Kopplungsglied insbesondere teleskopierbar sein und mehrere in Querrichtung relativ zueinander verstellbare und in den unterschiedlichen Verstellpositionen relativ zueinander fixierbare Teleskopabschnitte aufweisen, vorzugsweise aus solchen Teleskopabschnitten und Fixierungen bestehen.

Um die linke und die rechte Befestigungsvorrichtung miteinander zu koppeln, kann die Kopplungseinrichtung das linke Getriebe mit dem rechten Getriebe verbinden, falls die linke und die rechte Befestigungsvorrichtung jeweils ein eigenes Getriebe aufweisen. Falls die beiden Getriebe jeweils ein erstes Getriebeglied und ein zweites Getriebeglied der erläuterten oder in den Ansprüchen offenbarten Art aufweisen, kann die von der Kopplungseinrichtung gebildete Kopplungsstrecke sich insbesondere vom linken ersten Getriebeglied zum rechten ersten Getriebeglied erstrecken, die Kopplungseinrichtung also am linken ersten Getriebeglied und am rechten ersten Getriebeglied angelenkt, insbesondere starr befestigt sein. Die Bewegung des gemeinsamen Betätigungsorgans wird in solchen Ausführungen über das linke erste Getriebeglied auf die linke zweite Klemmbacke und über die Kopplungseinrichtung auf das rechte erste Getriebeglied und von diesem auf die rechte zweite Klemmbacke übertragen.

Die Kopplung der linken mit der rechten Befestigungsvorrichtung kann vorteilhafter Weise in Bewegungsrichtung des Betätigungsorgans zug- und schubfest sein. Bei einer Hin- und hergehenden Bewegung nimmt das Betätigungsorgan in derartigen Ausführungen die ersten Getriebeglieder mit, das Betätigungsorgan und die ersten Getriebeglieder führen die hin- und hergehende Bewegung gemeinsam als Einheit aus.

Die Kopplung einer linken Befestigungsvorrichtung mit einer rechten Befestigungsvorrichtung ist auch für sich von Vorteil und nicht nur in Kombination mit der hier beanspruchten Erfindung der translatorischen Getriebebewegungen. Die Anmelderin behält es sich vor, eine Teilungsanmeldung auf folgenden Gegenstand zu richten, nämlich auf eine

Vorrichtung zum Befestigen eines Ausstattungsgegenstands an einer linken und einer rechten Befestigungsstruktur (1, 2) eines Fahrzeugs, die jeweils einen in einer Längsrichtung (X) erstreckten Befestigungskanal (3) aufweisen, der sich längs eines Schlitzes (4) mit breiteren und demgegenüber engeren Schlitzabschnitten (5, 6) nach außen öffnet und von außen gesehen zumindest hinter jeweils den engeren Schlitzabschnitten (6) aufweitet, so dass wenigstens dort jeweils eine von außen hintergreifbare Kanalwand (7) erhalten wird, die Vorrichtung umfassend:
a) eine Basis (10) mit einer in einer Klemmrichtung (Z) über dem Schlitz der linken Befestigungsvorrichtung (1) positionierbaren, in die Klemmrichtung (Z) zur linken Befestigungsstruktur (1) drückbaren ersten Klemmbacke (20) und einer in Klemmrichtung (Z) über dem Schlitz (4) der rechten Befestigungsstruktur (2) positionierbaren, in die Klemmrichtung (Z) zur rechten Befestigungsstruktur (2) drückbaren rechten ersten Klemmbacke (20),
b) eine linke und eine rechte zweite Klemmbacke (30) jeweils mit einem Klemmabschnitt (31), der durch einen oder mehrere der breiteren Schlitzabschnitte (5) in den jeweiligen Befestigungskanal (3) einführbar ist, und jeweils einem vom Klemmabschnitt (31) gegen die Klemmrichtung (Z) abragenden, im Vergleich zum Klemmabschnitt (31) schlankeren Schaft (32),
c) wobei die zweiten Klemmbacken (30) an der Basis (10) in Längsrichtung (X) hin und her beweglich abgestützt und im eingeführten Zustand während oder nach Ausführung einer Längsbewegung mit dem Klemmabschnitt (31) gegen die hintergreifbare Kanalwand (7) des jeweiligen Befestigungskanals (3) drückbar sind, um die Befestigungsstrukturen (1, 2) zwischen den Klemmbacken (20, 30) zu klemmen und die Basis (10) dadurch an den Befestigungsstrukturen (1, 2) zu befestigen,
d) ein an der Basis (10) hin und her beweglich abgestütztes Betätigungsorgan (35)
e) ein das Betätigungsorgan (35) mit der linken zweiten Klemmbacke (30) koppelndes linkes Getriebe (40) und ein das Betätigungsorgan (35) mit der rechten zweiten Klemmbacke (30) koppelndes rechtes Getriebe (40) jeweils zur Übertragung der Bewegung des Betätigungsorgans (35) in die Längsbewegung der linken und der rechten zweiten Klemmbacke (30)
f) und eine Kopplungseinrichtung (47, 48, 49), die mittels wenigstens eines relativ zur Basis (10) hin und her beweglichen Kopplungsglieds (47, 48, 49) die linke zweite Klemmbacke (30) und die rechte zweite Klemmbacke (30), vorzugsweise das linke Getriebe (40) und das rechte Getriebe (40), miteinander koppelt, so dass die zweiten Klemmbacken (30) bei einer hin- und hergehenden Bewegung des Kopplungsglieds (47, 48, 49) jeweils eine hin- und hergehende Längsbewegung ausführen.

Die verwendeten Bezugszeichen sind auf die Figuren bezogen und wie bei Ansprüchen üblich nur beispielhaft zu verstehen. Solch eine zusammengesetzte Befestigungsvorrichtung kann durch jedes der hier offenbarten Merkmale vorteilhaft weitergebildet werden.

Die Basis kann in sich verstellbar sein, so dass die zusammenwirkenden Klemmbacken innerhalb der Basis relativ zu dem zu befestigenden Ausstattungsgegenstand parallel oder quer zur Klemmrichtung oder quer sowohl zur Klemmrichtung als auch zur Längsrichtung gemeinsam oder relativ zueinander verstellt werden können. In derartigen Ausführungen umfasst die Basis ein mit dem Ausstattungsgegenstand verbindbares oder verbundenes erstes Strukturteil und ein als Träger für die erste Klemmbacke dienendes zweites Strukturteil, das mit dem ersten Strukturteil in wenigstens eine der genannten Richtungen verstellbar verbunden ist. Handelt es sich um eine zusammengesetzte Befestigungsvorrichtung mit einer linken und einer rechten Befestigungsvorrichtung, so umfasst die Basis vorteilhafter Weise für die linke Befestigungsvorrichtung ein linkes zweites Strukturteil und für die rechte Befestigungsvorrichtung ein rechtes zweites Strukturteil, die jeweils einzeln in eine der Verstellrichtungen relativ zum ersten Strukturteil verstellt und in der jeweiligen Verstellposition relativ zum ersten Strukturteil fixiert werden können.

Vorteilhafte Merkmale werden auch in den Ansprüchen und deren Kombinationen offenbart.

Nachfolgend wird ein Ausführungsbeispiel der Erfindung anhand von Figuren erläutert. Am Ausführungsbeispiel offenbar werdende Merkmale bilden jeweils einzeln und in jeder Merkmalskombination die Gegenstände der Ansprüche und auch die vorstehend erläuterten Ausgestaltungen weiter. Es zeigen:
- Figur 1: eine zusammengesetzte Befestigungsvorrichtung mit einer erfindungsgemäßen linken und einer erfindungsgemäßen rechten Vorrichtung in einer Draufsicht auf eine Oberseite,
- Figur 2: die zusammengesetzte Befestigungsvorrichtung in einer Draufsicht auf eine Unterseite,
- Figur 3: die linke Befestigungsvorrichtung in der Draufsicht auf die Oberseite,
- Figur 4: die linke Befestigungsvorrichtung in einem Querschnitt und
- Figur 5: die linke Befestigungsvorrichtung in einer perspektivischen Sicht.

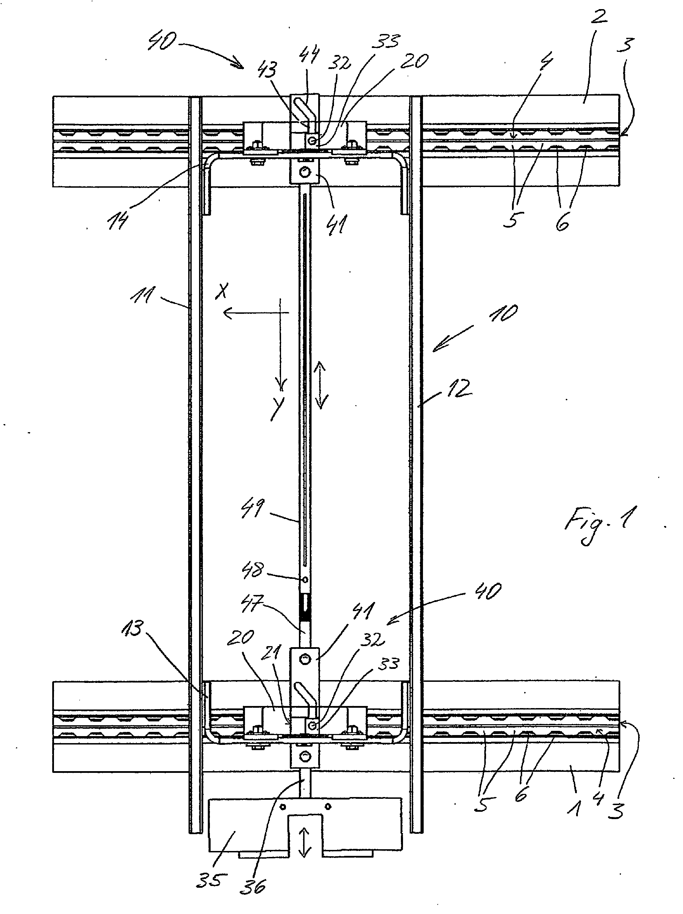

Figur 1 zeigt in einer Draufsicht eine Vorrichtung zum Befestigen eines Ausstattungsgegenstands in einem Fahrzeug, beispielsweise im Innenraum eines Flugzeugs. Bei dem Ausstattungsgegenstand kann es sich beispielsweise um einen Sitz, eine Trennwand, einen Schrank in einer Küche bzw. Galley oder einen anderen Behälter wie insbesondere ein so genanntes Doghouse handeln.

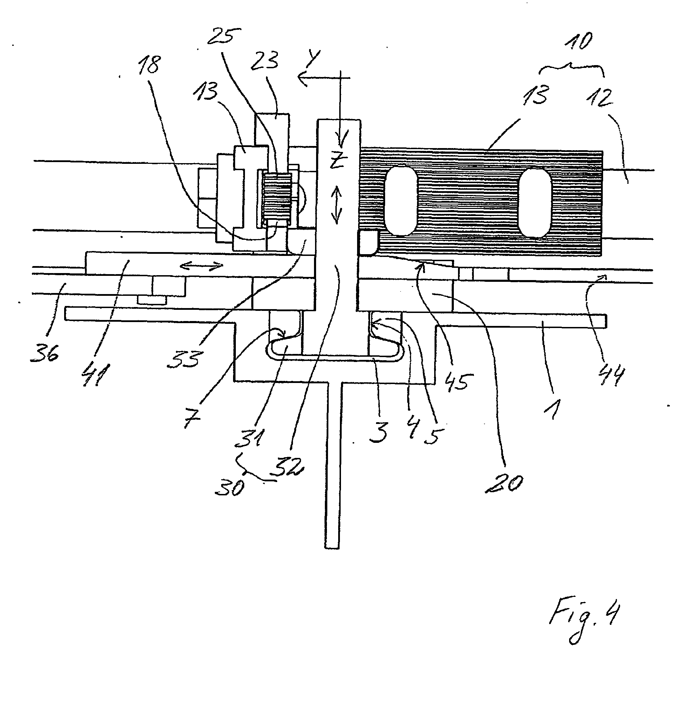

Mittels der Vorrichtung kann der Ausstattungsgegenstand an einer fahrzeugfesten Befestigungsstruktur wie etwa einer Bodenschiene befestigt werden. Im Fahrzeug erstrecken sich in eine Längsrichtung X eine linke Befestigungsstruktur 1 und eine rechte Befestigungsstruktur 2 in einer Querrichtung Y voneinander beabstandet nebeneinander. Die Befestigungsstrukturen 1 und 2 sind einander gleich. Sie bilden jeweils einen in Längsrichtung X erstreckten Befestigungskanal 3, der sich an einer freien Oberseite der jeweiligen Befestigungsstruktur 1 oder 2 nach außen über einen in Längsrichtung X durchgehend erstreckten Schlitz 4 öffnet. Der Schlitz 4 weist in Längsrichtung X alternierend aufeinander folgend in Querrichtung Y gemessen breitere Schlitzabschnitte 5 und engere Schlitzabschnitte 6 auf. Im Querschnitt gesehen verengt sich der Befestigungskanal 3 zumindest in den Bereichen der engeren Schlitzabschnitte 6 in Richtung auf die längs durchgehende Schlitzöffnung, so dass von außen gesehen in den engeren Schlitzabschnitten 6 jeweils eine hintergreifbare Kanalwand 7 (Figur 4) verbleibt. Figur 1 zeigt die Vorrichtung in einer Befestigungsposition, die sie einnimmt, wenn sie bestimmungsgemäß an den Befestigungsstrukturen 1 und 2 befestigt ist. Dargestellt ist die Draufsicht auf die den Befestigungsstrukturen 1 und 2 abgewandte Oberseite der Vorrichtung.

Die Vorrichtung setzt sich aus einer mit der linken Befestigungsstruktur 1 zusammenwirkenden linken Befestigungsvorrichtung und einer mit der rechten Befestigungsstruktur 2 zusammenwirkenden rechten Befestigungsvorrichtung zusammen, die im Bereich einer gemeinsamen Basis 10 mit dem Ausstattungsgegenstand verbunden sind oder verbunden werden können. Die rechte und linke Befestigungsvorrichtung sind einander gleich, zumindest soweit es für die Erfindung von Bedeutung ist, so dass Ausführungen zu jeweils nur einer der Befestigungsvorrichtungen für die andere gleichermaßen gelten.

Die Basis 10 umfasst zwei in Querrichtung Y erstreckte Leisten 11 und 12, die in X-Richtung voneinander beabstandet nebeneinander verlaufen. Die Leisten 11 und 12 sind im Bereich der Befestigungsstrukturen 1 und 2 mittels jeweils wenigstens, im Beispiel genau eines Verbinders 13 bzw. 14 miteinander verbunden. Die Verbinder 13 und 14 weisen in der Draufsicht gesehen jeweils die Form eines flachen U auf und sind im Bereich ihrer Seitenschenkel mit der jeweiligen Leiste 11 oder 12 verbunden. Die Verbinder 13 und 14 dienen als Träger für Klemmbacken der Befestigungsvorrichtungen.

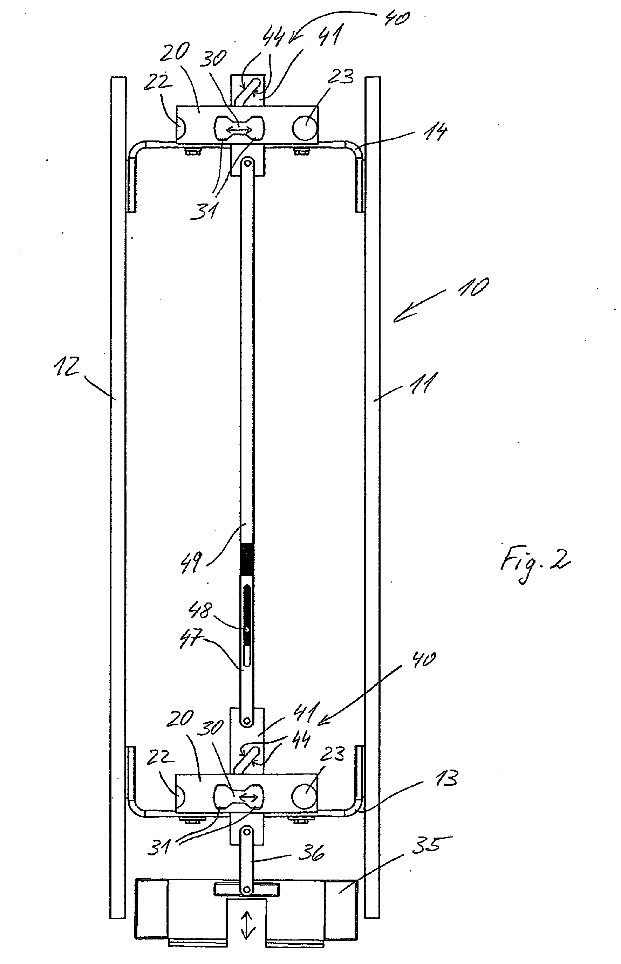

Figur 2 zeigt die aus der linken und der rechten Befestigungsvorrichtung zusammengesetzte Vorrichtung in einer Draufsicht auf die Unterseite, losgelöst von den Befestigungsstrukturen 1 und 2. Die linke und die rechte Befestigungsvorrichtung umfassen jeweils eine erste Klemmbacke 20 und eine zugeordnete zweite Klemmbacke 30, die im Zusammenwirken mit der zugeordneten ersten Klemmbacke 20 im befestigten Zustand in einem Klemmeingriff mit der jeweiligen Befestigungsstruktur 1 oder 2 ist.

Die erste Klemmbacke 20 weist an ihrer im positionierten Zustand der Befestigungsstruktur 1 oder 2 zugewandten Unterseite abragende Eingriffsformen 22 und 23 auf. Die Eingriffsformen 22 und 23 sind im Querschnitt der Form nach an die breiteren Schlitzabschnitte 5 angepasst, so dass die erste Klemmbacke 20 mit den Eingriffsformen 22 und 23 im positionierten Zustand in mehrere, im Ausführungsbeispiel in genau zwei, breitere Schlitzabschnitte 5 formschlüssig eingreift. Die Klemmbacken 20 werden somit im positionierten Zustand der Vorrichtung in Längsrichtung X relativ zu den Befestigungsstrukturen 1 und 2 unbeweglich oder zumindest nahezu unbeweglich festgelegt. Dadurch wird auch die Vorrichtung im Ganzen in Längsrichtung X an den Befestigungsstrukturen 1 und 2 festgelegt.

Wie aus der Zusammenschau der Figuren 2 und 4 ersichtlich ist, weisen die zweiten Klemmbacken 30 jeweils einen Klemmabschnitt 31 und einen gegenüber dem Klemmabschnitt 31 in Querrichtung Y schmaleren Schaft 32 auf. Der Schaft 32 (Figur 4) erstreckt sich im positionierten Zustand der Vorrichtung in einer zur X-Y-Ebene der Befestigungsstrukturen 1 und 2 orthogonalen Klemmrichtung Z durch den Schlitz 4. Der Klemmabschnitt 31 ist in Z-Richtung an einem Ende der Klemmbacke 20 angeordnet. In der Draufsicht gesehen (Figur 2) weist der Klemmabschnitt 31 einen breiteren linken Längsabschnitt und einen breiteren rechten Längsabschnitt und dazwischen einen schmaleren Verbindungsabschnitt auf, so dass er in der Draufsicht in etwa die Form eines Hundeknochens hat. Die breiteren Längsabschnitte sind etwas schmaler als die breiteren Schlitzabschnitte 5, aber breiter als die engeren Schlitzabschnitte 6, so dass die Klemmbacken 30 in die jeweilige Befestigungsstruktur 1 oder 2 durch deren Schlitz 4 eingeführt werden können, wenn sich die breiteren Längsabschnitte der Klemmbacken 30 in Längsrichtung X gesehen auf der Höhe jeweils eines der breiteren Schlitzabschnitte 5 befinden.

Figur 4 zeigt eine der Befestigungsvorrichtungen, beispielhaft die linke Befestigungsvorrichtung stellvertretend auch für die rechte, im an der Befestigungsstruktur 1 befestigten Zustand in einem Querschnitt. Die Befestigungsstruktur 1 ist zwischen der ersten Klemmbacke 20 und der zweiten Klemmbacke 30 in Klemmrichtung Z eingeklemmt. In diesem Klemmeingriff drückt die Klemmbacke 20 in Klemmrichtung Z von außen gegen die Befestigungsstruktur 1, und die Klemmbacke 30 drückt mit ihrem Klemmabschnitt 31 gegen die Klemmrichtung Z im Befestigungskanal 3 von innen im Hintergriff mit der Kanalwand 7 dagegen. Der durch die Klemmstelle verlaufende Kraftfluss schließt sich innerhalb der Befestigungsvorrichtung.

Die zweiten Klemmbacken 30 sind jeweils relativ zur Basis 10 und relativ zur zugeordneten ersten Klemmbacke 20 in Längsrichtung X linear hin- und her beweglich gelagert. Dies ist in Figur 2 mit jeweils einem Bewegungsdoppelpfeil angedeutet. Die Klemmbacken 30 sind des weiteren ebenfalls relativ zur Basis 10 und zur jeweils zugeordneten Klemmbacke 20 in Klemmrichtung Z hin- und her linear beweglich gelagert, wie dies in Figur 4 mit dem in Z-Richtung weisenden Doppelpfeil angedeutet wird.

Um den Klemmeingriff mit den Befestigungsstrukturen 1 und 2 herstellen und auch wieder lösen zu können, umfasst die Vorrichtung ein Betätigungsorgan 35, das per Hand und vorteilhafter Weise ohne Werkzeug bedient werden kann. Das Betätigungsorgan 35 ist relativ zur Basis 10 translatorisch hin- und her bewegbar, im Ausführungsbeispiel wie bevorzugt linear in Querrichtung Y. Das Betätigungsorgan 35 ist mittels eines linken Getriebes 40 mit der linken zweiten Klemmbacke 30 und eines rechten Getriebes 40 mit der rechten zweiten Klemmbacke 30 gekoppelt. Mittels der Getriebe 40 wird eine in Querrichtung Y hin- und her gehende Bewegung des Betätigungsorgans 35 in eine in Längsrichtung X hin- und hergehende Längsbewegung der Klemmbacken 30 und auch in Hubbewegungen in und gegen die Klemmrichtung Z umgewandelt.

Die linke und die rechte Befestigungsvorrichtung sind mittels einer Kopplungseinrichtung gekoppelt, so dass beide Befestigungsvorrichtungen mittels des gleichen Betätigungsorgans 35 zum Klemmen und Lösen des Klemmeingriffs betätigt werden können. Die Kopplungseinrichtung besteht aus einem in Querrichtung Y zug- und schubsteifen Kopplungsglied 47-49, das beispielhaft in Form einer in Y-Richtung lang gestreckten, schlanken Kopplungsstange verwirklicht ist. Das Kopplungsglied 47-49 verbindet die beiden Getriebe 40 miteinander.

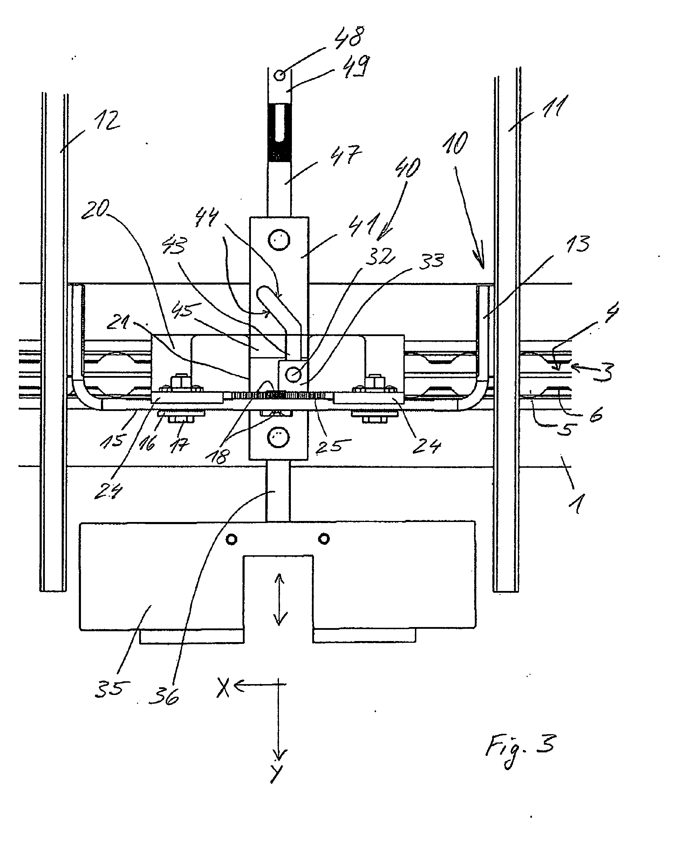

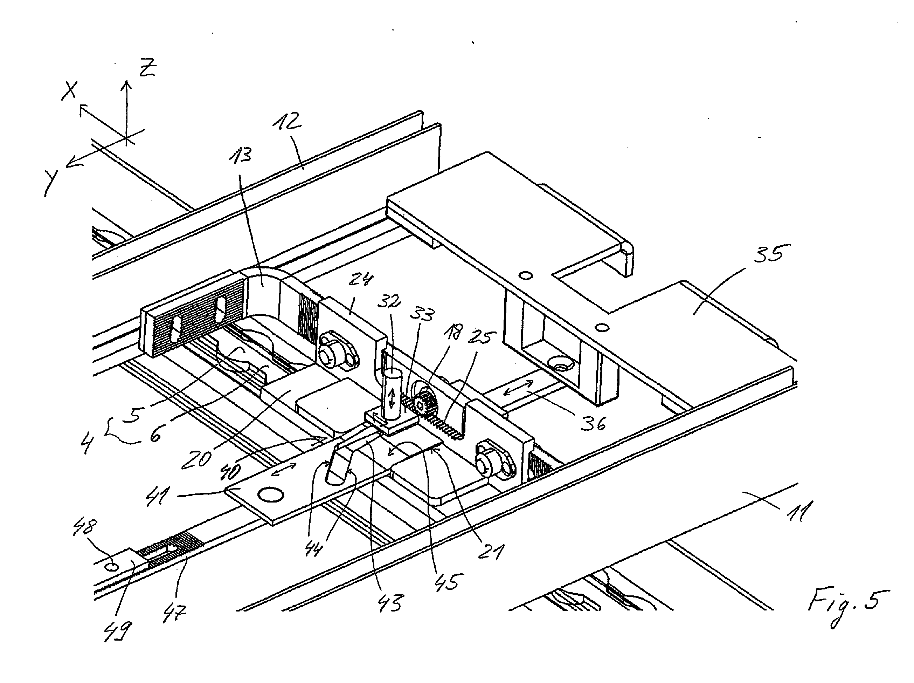

Figur 3 zeigt das Betätigungsorgan 35 und die diesem näher gelegene linke Befestigungsvorrichtung in einer im Vergleich zu Figur 1 vergrößerten Darstellung, anhand der in Verbindung mit Figur 4 und der perspektivischen Sicht der Figur 5 die Wirkungsweise des linken Getriebes 40 stellvertretend auch für das rechte erläutert wird. Das Getriebe 40 umfasst ein erstes Getriebeglied 41 und ein zweites Getriebeglied 32, die miteinander in einem Längsführungseingriff zusammenwirken, in dem eine in Y-Richtung hin- und her gehende Bewegung des Betätigungsorgans 35 in eine in Längsrichtung X hin- und her gehende Längsbewegung der zweiten Klemmbacke 30 umgewandelt wird. Das Getriebeglied 41 weist eine Längsführungskurve 44 auf, und das Getriebeglied 32 bildet ein mit der Führungskurve 44 im Längsführungseingriff zusammenwirkendes Eingriffsglied. Die Längsführungskurve 44 erstreckt sich in Längsrichtung X und Querrichtung Y, beispielhaft handelt es sich um eine in der X-Y-Ebene erstreckte Führungskurve. Sie ist sowohl zur X- als auch zur Y-Achse jeweils unter einem Winkel größer 0° und kleiner 90° geneigt. Beispielhaft ist sie als Schräge gebildet, grundsätzlich könnte sie auch bogenförmig verlaufen oder einen oder mehrere bogenförmige Abschnitte oder einen oder mehrere unterschiedlich geneigte schräge Abschnitte aufweisen.

Das Getriebeglied 32 wird unmittelbar von der Klemmbacke 30 gebildet, nämlich von deren Schaft 32, der sich zu diesem Zweck wie in Figur 4 erkennbar durch das Getriebeglied 41 erstreckt, um im Durchgriff mit der Längsführungskurve 44 zusammen zu wirken. Das Getriebeglied 41 weist entsprechend einen Durchgang in Klemmrichtung Z auf, dessen Seitenwand die Längsführungskurve 44 bildet. Der platzsparenden, kompakten Bauweise kommt es entgegen, dass sich der Schaft 32 auch durch die erste Klemmbacke 20 erstreckt. Vom Befestigungskanal 3 aus gesehen erstreckt sich der Schaft 32 zunächst durch den Schlitz 4, anschließend durch die erste Klemmbacke 20 und dann durch den Durchgang des Getriebeglieds 41. Das Getriebeglied 41 ist in Querrichtung Y hin- und her auf der vom Befestigungskanal 3 abgewandten Oberseite der Klemmbacke 20 gleitbeweglich. Dabei wird es von einer von der Klemmbacke 20 gebildeten Querführung 21, beispielhaft zwischen Querführungsflächen 21 (Figuren 3 und 5), in Querrichtung Y linear geführt.

Das Getriebe 40 umfasst einen weiteren Führungseingriff, einem Klemmführungseingriff, in dem das erste Getriebeglied 41 mit einem dritten Getriebeglied 33 zusammenwirkt. Das Getriebeglied 41 bildet für den Klemmführungseingriff eine Klemmführungskurve 45, und das dritte Getriebeglied 33 bildet das im Klemmführungseingriff damit zusammenwirkende Eingriffsglied. Die Klemmführungskurve 45 verläuft zumindest im Wesentlichen in Querrichtung Y und Klemmrichtung Z. Sie ist am besten in den Figuren 4 und 5 erkennbar. Die Führungskurve 45 ist sowohl zur Y- als auch zur Z-Richtung jeweils unter einem Winkel größer 0° und kleiner 90° geneigt, wobei die auf die Y-Achse gemessene Neigung deutlich kleiner als die auf die Z-Achse gemessene Neigung ist. Im Ausführungsbeispiel ist die Klemmführungskurve 45 gerade. Sie bildet eine in Y-Richtung flache Rampe. Das dritte Getriebeglied 33 ist zumindest in Bezug auf die Z-Richtung unbeweglich mit der zweiten Klemmbacke 30 verbunden. Beispielhaft ist es wie bevorzugt unbeweglich mit der Klemmbacke 30 gefügt. Grundsätzlich könnte es in einem Stück mit der Klemmbacke 30 geformt sein, eine separate Formung mit anschließendem Fügen ist jedoch für den Zusammenbau der Vorrichtung von Vorteil. Die Führungskurve 45 ist an einer vom Klemmabschnitt 31 der Klemmbacke 30 abgewandten Rückseite, im positionierten Zustand an der Oberseite, des ersten Getriebeglieds 41 angeordnet, beispielhaft wie bevorzugt am Getriebeglied 41 geformt. Die Klemmführungskurve 45 bildet einen verdickten Bereich des Getriebeglieds 41. Das Getriebeglied 45 liegt auf der Klemmbacke 20 flach auf, in einer Abwandlung könnte es im Bereich der Führungskurve 45 in Ausbildung der Führungskurve 45 von seiner Unterlage, vorliegend der Klemmbacke 20, weggebogen sein. Eine Auflage auch über den Verlauf der Führungskurve 45 und deren Ausbildung durch eine entsprechende Verdickung wird der größeren Steifigkeit wegen jedoch bevorzugt.

Die Längsführungskurve 44 bildet mit dem zweiten Getriebeglied 32 im Längsführungseingriff ein erstes Kurvengelenk. Die Klemmführungskurve 45 bildet mit dem dritten Getriebeglied 33 ein zweites Kurvengelenk. Die beiden Kurvengelenke sind in ihrer Wirkungsweise voneinander separiert in dem Sinne, dass bei einer hin- und hergehenden Bewegung des Betätigungsorgans 35 stets nur einer der beiden Führungseingriffe besteht, so dass eine Sequenz-oder Ablaufsteuerung erhalten wird, die dafür sorgt, dass die Längsbewegung und die Klemmhubbewegung der Klemmbacken 30 stets nur nacheinander stattfinden.

Zur Längsführungskurve 44 ist noch nachzutragen, dass das Getriebeglied 41 so gestaltet ist, dass es je nach Bewegungsrichtung ±Y des Betätigungsorgans 35 vor oder nach dem Längsführungseingriff vom Getriebeglied 32 entkoppelt in Querrichtung ±Y bewegt werden kann. Dies wird dadurch gelöst, dass sich der Durchgang, der die Führungskurve 44 bildet, von einem Ende der Führungskurve 44 aus genau in Querrichtung Y weiter erstreckt, so dass in diesem Fortsatz des Durchgangs, der in den Figuren 3 und 5 mit dem Bezugszeichen 43 versehen ist, kein Eingriff besteht, der Bewegungen der Klemmbacken 30 bewirkt. Der Fortsatz 43 überlappt in Querrichtung Y mit der Führungskurve 45. Während das Getriebeglied 32 den Fortsatz 43 durchfährt, ist das dritte Getriebeglied 33 mit der Klemmführungskurve 45 in dem die Hubbewegung in Z-Richtung bewirkenden Klemmführungseingriff.

Die Wirkungsweise der Vorrichtung ist unter Bezugnahme auf die Figuren 1 bis 5 wie folgt:
Die Vorrichtung wird relativ zu den Befestigungsstrukturen 1 und 2 positioniert, so dass sie die aus Figur 1 ersichtliche Befestigungsposition einnimmt, in der sich die Klemmbacken 20 und 30 in Klemmrichtung Z gesehen über den Befestigungsstrukturen 1 und 2 und die Klemmbacken 30 in Längsrichtung X mit ihren breiteren Längsabschnitten über jeweils einem breiteren Schlitzabschnitt 5 befinden. In dieser in X- und Y-Richtung ausgerichteten Position können die Klemmbacken 30 durch den Schlitz 4 in den Befestigungskanal 3 eingeführt werden. Bei dem Einführen gelangen die Eingriffsformen 22 und 23 der Klemmbacken 20 in formschlüssigen Eingriff mit jeweils einem der breiteren Schlitzabschnitte 5. Die Vorrichtung nimmt nun die Befestigungsposition ein, ist also relativ zu den Befestigungsstrukturen 1 und 2 in X- und Y-Richtung ausgerichtet und sitzt im Bereich der Klemmbacken 20 auf den Befestigungsstrukturen 1 und 2 auf. Sie hat relativ zu den Befestigungsstrukturen 1 und 2 nur noch einen einzigen Freiheitsgrad der Bewegung, nämlich in Z-Richtung. Durch Herstellen des Klemmeingriffs wird ihr dieser Bewegungsfreiheitsgrad genommen, so dass sie mit den Befestigungsstrukturen 1 und 2 form- und reibschlüssig fest verbunden ist.

Um den Klemmeingriff herzustellen, wird bei in Befestigungsposition befindlicher Vorrichtung das an der Bedienseite der Vorrichtung angeordnete Betätigungsorgan 35 in Querrichtung Y bewegt. Im Ausführungsbeispiel wird das Betätigungsorgan 35 zum Herstellen des Klemmeingriffs in die Y-Position gedrückt, die es in den Figuren bereits einnimmt. Die Figuren zeigen die Vorrichtung im bereits hergestellten Klemmeingriff, in dem wie am besten aus Figur 4 ersichtlich die Befestigungsstrukturen 1 und 2 zwischen den ersten Klemmbacken 20 und den Klemmabschnitten 31 der zweiten Klemmbacken 30 in Z-Richtung eingeklemmt und die Vorrichtung sowie entsprechend der Ausstattungsgegenstand an den Befestigungsstrukturen 1 und 2 klemmend gehalten wird.

Um den Klemmeingriff zu lösen, greift der Benutzer das Betätigungsorgan 35, das mit einem für die Ausübung einer Zugkraft geeigneten Handgriff geformt ist, und zieht es zu sich heran, in den Figuren 1 bis 3 jeweils nach unten. Das Betätigungsorgan 35 ist in seine Bewegungsrichtung Y mittels eines zug- und schubsteifen Übertragungsglieds 36 fest, also unbeweglich, mit dem ersten Getriebeglied 41 der linken Befestigungsvorrichtung verbunden, so dass dieses Getriebeglied 41 die Bewegung des Betätigungsorgans 35 mitmacht und in Richtung auf den Benutzer zu bewegt wird. Das erste Getriebeglied 41 der rechten Befestigungsvorrichtung ist über die Kopplungseinrichtung 47-49 zug- und schubsteif mit dem Getriebeglied 41 der linken Befestigungsvorrichtung verbunden, macht also dessen Bewegung in Y-Richtung mit. Das Betätigungsorgan 35 und die Getriebeglieder 41 vollführen die gleiche Bewegung in die Querrichtung Y, sie bilden eine Bewegungseinheit.

Im Verlaufe der Querbewegung gelangt das dritte Getriebeglied 33 der linken und der rechten Befestigungsvorrichtung in den Bereich der jeweiligen Klemmführungskurve 45 (Figuren 3 bis 5), wodurch die Klemmkraft im Klemmeingriff verringert und der Klemmeingriff schließlich gelöst wird, entsprechend der Neigung der Führungskurve 45. Während das dritte Getriebeglied 33 in Querrichtung Y die Klemmführungskurve 45 durchläuft, wobei in Querrichtung Y relativ zur Basis 10 die Getriebeglieder 41 bewegt werden und die Getriebeglieder 33 in Y-Richtung unbeweglich sind, ist das zweite Getriebeglied 32 vom ersten Getriebeglied 41 frei, es durchfährt den Fortsatz 43. Nachdem der Klemmeingriff gelöst ist, gelangt das zweite Getriebeglied 32 bei weiterer Bewegung des Betätigungsorgans 35 in die gleiche Y-Richtung in den Längsführungseingriff mit der Längsführungskurve 44. Aufgrund der Neigung der Führungskurve 44 drückt diese das Getriebeglied 32 und somit die zweite Klemmbacke 30 in Längsrichtung X, in der Darstellung der Figuren 1 und 3 nach links. Dieser Längshub ist so lang, dass die breiteren Längsabschnitte des jeweiligen Klemmabschnitts 31 wieder in den Bereich der breiteren Schlitzabschnitte 5 gelangen, so dass am Ende des Längshubs, bei vollständig ausgezogenem Betätigungsorgan 35, die Klemmbacken 30 aus dem Befestigungskanal 3 gezogen und die Vorrichtung mitsamt des darauf oder daran befestigten Ausstattungsgegenstands von den Befestigungsstrukturen 1 und 2 weggenommen, beispielsweise angehoben werden können.

Ein besonderer Vorteil der Vorrichtung ist die nur translatorische Beweglichkeit der beweglichen Komponenten wie insbesondere der Klemmbacken 30, der Getriebeglieder 41 und auch des Betätigungsorgans 35, wobei allerdings letzteres auch schwenkbeweglich oder andersartig rotatorisch beweglich an der Basis 10 abgestützt sein könnte. Von Vorteil ist auch der flache Aufbau der Vorrichtung, insbesondere der Getriebeglieder 41 und der Klemmbacken 20. Der flache Aufbau kommt insbesondere auch in Figur 4 zum Ausdruck. Die erste Klemmbacke 20 und das darauf gleitbewegliche erste Getriebeglied 41 sind übereinander geschichtet, in einem Schichtaufbau. Aufgrund der translatorischen Beweglichkeit und dem entsprechend gestalteten Führungseingriff bei 44 bzw. 45 müssen keine Drehmomente übertragen werden. Dies kommt der Steifigkeit und somit Robustheit der Vorrichtung entgegen. Das Gewicht kann gering gehalten werden, ein Vorteil, der insbesondere in der Luftfahrttechnik nicht zu vernachlässigen ist. Ein anderer besonderer Vorteil ist in der sequentiellen Steuerung, der Ablaufsteuerung von Längshubbewegung und Klemmhubbewegung zu sehen.

Die Vorrichtung erlaubt flexible Anpassungen an örtliche Besonderheiten hinsichtlich der Befestigungsstrukturen 1 und 2 und auch des jeweiligen Ausstattungsgegenstands. So können die linke und die rechte Befestigungsvorrichtung in Z-Richtung relativ zu den Leisten 11 und 12 verstellt werden, um den Ausstattungsgegenstand in einem gewissen Ausmaß in Z-Richtung verstellen zu können. Für diese Verstellbarkeit sind die Verbinder 13 und 14 in Z-Richtung verstellbar und in jeder Verstellposition festlegbar mit den Leisten 11 und 12 verbunden. Die Verbindung kann insbesondere eine Schraubverbindung sein. Für die Verstellbarkeit in Z-Richtung weisen die Verbinder 13 und 14 in Z-Richtung erstreckte Langlöcher auf. Alternativ könnten derartige Langlöcher stattdessen in den Leisten 11 und 12 vorgesehen sein. Im Sinne der Verstellbarkeit bilden die Leisten 11 und 12 einen ersten und die Verbinder 13 und 14 einen relativ dazu verstellbaren zweiten Strukturteil der Basis 10.

Die Vorrichtung erlaubt ferner, wenigstens eine der beiden Befestigungsvorrichtungen relativ zur Basis 10 und insbesondere relativ zur anderen Befestigungsvorrichtung in Querrichtung Y zu verstellen. Die Y-Verstellbarkeit ist deshalb von Vorteil, weil bei unterschiedlichen Fahrzeugen die Befestigungsstrukturen 1 und 2 nicht immer in Querrichtung Y den gleichen Abstand voneinander haben. Die Verstellung relativ zur Basis 10 kann wie im Falle der Verstellung in Z-Richtung mittels entsprechend in Y erstreckter Langlöcher bei den Leisten 11 und 12 oder den Verbindern 13 und 14 erreicht werden. Für die Querverstellung ist die Kopplungseinrichtung 47-49 in Querrichtung Y ebenfalls verstellbar, beispielhaft wie bevorzugt teleskopierbar. Das Kopplungsglied 47-49 ist im Ausführungsbeispiel zweigeteilt mit einem ersten Kopplungsabschnitt 47 und einem zweiten Kopplungsabschnitt 49, die relativ zueinander in Y-Richtung verstellbar und in der jeweiligen Verstellposition mittels einer Fixierung 48, beispielsweise einer Schraubverbindung, aneinander festlegbar sind, um die in Y-Richtung zug- und schubsteife Kopplung zu gewährleisten.

Schließlich kann die Vorrichtung auch noch in Längsrichtung X verstellt werden. Diese Verstellbarkeit ist vor allem dann von Vorteil, wenn eine Justierung auf eine Zwischenposition gewünscht wird, die nicht dem Abstand jeweils nächst benachbarter Schlitzabschnitte 5 entspricht, also für eine X-Verstellung innerhalb der Längsteilung der Befestigungsstrukturen 1 und 2. Grundsätzlich ist die Längsverstellbarkeit aber auch von Vorteil, weil in vielen Einbausituationen freie breitere Schlitzabschnitte 5 zum Einführen der Klemmbacken 30 nur in begrenzter Anzahl zur Verfügung stehen.

Für die Längsverstellung umfasst die Vorrichtung ein Verstellgetriebe, wie es insbesondere aus der Figur 5, aber auch aus den Figuren 3 und 4 ersichtlich ist. Das Verstellgetriebe umfasst ein erstes Verstellglied 18 und ein damit in einem Verstelleingriff befindliches zweites Verstellglied 25. Das Verstellglied 18 ist ein an der Basis 10 drehbar gelagertes Zahnrad und das Verstellglied 25 eine damit im Zahneingriff befindliche Zahnreihe 25. Die Zahnreihe 25 ist zumindest in X-Richtung relativ zur ersten Klemmbacke 20 unbeweglich, beispielhaft ist sie an der ersten Klemmbacke 20 geformt; alternativ könnte sie mit der Klemmbacke 20 gefügt sein. Die Klemmbacke 20 ist für die Längsverstellung mit der Basis 10 mittels beispielhaft zweier Befestigungselemente 17, eines links und eines rechts vom Verstelleingriff, verbunden. Bei der Verbindung handelt es sich um jeweils eine Schraubverbindung. Die Verbindung ist nicht nur kraftschlüssig, sondern auch formschlüssig, wobei der Formschluss durch feine Zahnungen 15 und 16 hergestellt wird, von denen die eine an der Basis, in Figur 3 am Verbinder 13, und die andere an Scheiben 16 vorgesehen ist, die den Befestigungselementen 17 zugeordnet sind.

Zum Längsverstellen werden die Befestigungselemente 17 so weit gelöst, dass sich der formschlüssige Eingriff der Zahnungen 15 und 16 löst. Im derart gelösten Zustand wird das Verstellglied 18 verstellt, im Ausführungsbeispiel verdreht, so dass im Verstelleingriff die Klemmbacke 20 in Längsrichtung L relativ zur Basis 10 verstellt wird. In der neuen Verstellposition wird durch Anziehen der Befestigungselemente 17 die Fixierung wieder hergestellt und durch die Zahnungen 15 und 16 auch formschlüssig gesichert. Eine gleichartige Verstellung bzw. ein gleichartiges Verstellgetriebe 18, 25 ist auch bei der rechten Befestigungsvorrichtung vorgesehen. Die Verstellung kann beispielsweise mit einem schraubenzieherähnlichen Werkzeug und bei der vom Benutzer abgewandten rechten Befestigungsvorrichtung mit solch einem Werkzeug mit langem Schaft vorteilhafterweise auch noch im befestigten Zustand der Vorrichtung vorgenommen werden.

### Bezugszeichen

- 1: Befestigungsstruktur
- 2: Befestigungsstruktur
- 3: Befestigungskanal
- 4: Schlitz
- 5: breiterer Schlitzabschnitt
- 6: engerer Schlitzabschnitt
- 7: Kanalwand
- 8: -
- 9: -
- 10: Basis
- 11: Leiste
- 12: Leiste
- 13: Verbinder
- 14: Verbinder
- 15: Zahnung
- 16: Zahnung, Scheibe
- 17: Befestigungselement
- 18: erstes Verstellglied
- 19: -
- 20: erste Klemmbacke
- 21: Querführung
- 22: Eingriffsform
- 23: Eingriffsform
- 24: Schenkel
- 25: zweites Verstellglied
- 26: -
- 27: -
- 28: -
- 29: -
- 30: zweite Klemmbacke
- 31: Klemmabschnitt
- 32: Schaft, zweites Getriebeglied
- 33: drittes Getriebeglied
- 34: -
- 35: Betätigungsorgan
- 36: Übertragungsglied
- 37: -
- 38: -
- 39: -
- 40: Getriebe
- 41: erstes Getriebeglied
- 42: -
- 43: Fortsatz
- 44: Längsführungskurve
- 45: Klemmführungskurve
- 46: -
- 47: Kopplungsglied
- 48: Kopplungsglied
- 49: Kopplungsglied

- X: Längsrichtung
- Y: Querrichtung
- Z: Klemmrichtung

## Patentansprüche

1. Vorrichtung zum Befestigen eines Ausstattungsgegenstands an einer Befestigungsstruktur (1) eines Fahrzeugs, die einen in einer Längsrichtung (X) erstreckten Befestigungskanal (3) aufweist, der sich längs eines Schlitzes (4) mit breiteren und demgegenüber engeren Schlitzabschnitten (5, 6) nach außen öffnet und von außen gesehen zumindest hinter jeweils den engeren Schlitzabschnitten (6) aufweitet, so dass wenigstens dort jeweils eine von außen hintergreifbare Kanalwand (7) erhalten wird, die Vorrichtung umfassend:
a) eine Basis (10) mit einer in einer Klemmrichtung (Z) über dem Schlitz (4) positionierbaren, in die Klemmrichtung (Z) zur Befestigungsstruktur (1) drückbaren ersten Klemmbacke (20),
b) eine zweite Klemmbacke (30) mit einem Klemmabschnitt (31), der durch einen oder mehrere der breiteren Schlitzabschnitte (5) in den Befestigungskanal (3) einführbar ist, und einem vom Klemmabschnitt (31) gegen die Klemmrichtung (Z) abragenden, im Vergleich zum Klemmabschnitt (31) schlankeren Schaft (32),
c) wobei die zweite Klemmbacke (30) an der Basis (10) in Längsrichtung (X) hin und her beweglich abgestützt und im eingeführten Zustand während oder nach Ausführung einer Längsbewegung mit dem Klemmabschnitt (31) gegen die hintergreifbare Kanalwand (7) des Befestigungskanals (3) drückbar ist, um die Befestigungsstruktur (1) zwischen den Klemmbacken (20, 30) zu klemmen und die Basis (10) dadurch an der Befestigungsstruktur (1) zu befestigen, **gekennzeichnet durch**
d) ein an der Basis (10) hin und her beweglich abgestütztes Betätigungsorgan (35)
e) und ein das Betätigungsorgan (35) mit der zweiten Klemmbacke (30) koppelndes Getriebe (40) mit einem ersten Getriebeglied (41) und einem zweiten Getriebeglied (32), von denen eines (41) eine Längsführungskurve (44) aufweist und das andere (32) ein mit der Längsführungskurve (44) in einem Längsführungseingriff zusammenwirkendes Eingriffsglied bildet,
f) wobei die Getriebeglieder (41, 32) im Längsführungseingriff relativ zueinander und jeweils relativ zur Basis (10) translatorisch hin und her beweglich sind, so dass eine Bewegung des Betätigungsorgans (35) die Längsbewegung der zweiten Klemmbacke (30) bewirkt.

2. Vorrichtung nach dem vorhergehenden Anspruch, **dadurch gekennzeichnet, dass** eine relativ zur Basis (10) nur translatorische Bewegung des ersten Getriebeglieds (41) im Längsfiihrungseingriff eine relativ zur Basis (10) nur translatorische Bewegung des zweiten Getriebeglieds (32) bewirkt.

3. Vorrichtung nach einem der vorhergehenden Ansprüche, **dadurch gekennzeichnet, dass** das erste Getriebeglied (41) relativ zu den Klemmbacken (20, 30) und das zweite Getriebeglied (32) relativ zu der ersten Klemmbacke (20) nur translatorisch beweglich sind.

4. Vorrichtung nach einem der vorhergehenden Ansprüche, **dadurch gekennzeichnet, dass** das zweite Getriebeglied (32) mit der zweiten Klemmbacke (30) in quer zur Klemmrichtung (Z) weisende Richtungen (X, Y) und vorzugsweise auch in Klemmrichtung (Z) unbeweglich verbunden oder mit der zweiten Klemmbacke (30) in einem Stück geformt ist.

5. Vorrichtung nach einem der vorhergehenden Ansprüche, **dadurch gekennzeichnet, dass** das Betätigungsorgan (35) an der Basis (10) translatorisch, vorzugsweise quer zur Längsrichtung (X) oder Klemmrichtung (Z), hin und her beweglich abgestützt und bezüglich seiner translatorischen Beweglichkeit mit dem ersten Getriebeglied (41) vorzugsweise zug- und schubfest verbunden ist.

6. Vorrichtung nach einem der vorhergehenden Ansprüche, **dadurch gekennzeichnet, dass** der Schaft (32) der zweiten Klemmbacke (30) in und gegen die Klemmrichtung (Z) über die Längsfiihrungskurve (44) hinaus ragt, das die Längsführungskurve (44) aufweisende Getriebeglied (41) im Bereich der Längsführongskurve (44) in Klemmrichtung (Z) vorzugsweise durchragt.

7. Vorrichtung nach einem der vorhergehenden Ansprüche, **dadurch gekennzeichnet, dass** eine der Klemmbacken (20, 30) relativ zur anderen, vorzugsweise die zweite Klemmbacke (30) relativ zu der Basis (10) und der ersten Klemmbacke (20), in und gegen die Klemmrichtung (Z) beweglich ist, um die Befestigungsstruktur (1, 2) zwischen den Klemmbacken (20, 30) zu klemmen, und die in Klemmrichtung (Z) bewegliche Klemmbacke (30) mit dem Betätigungsorgan (35) so gekoppelt ist, vorzugsweise mittels des Getriebes (40), dass eine hin- und hergehende Bewegung des Betätigungsorgans (35) die Bewegung dieser Klemmbacke (30) in und gegen die Klemmrichtung (Z) bewirkt.

8. Vorrichtung nach dem vorhergehenden Anspruch, **dadurch gekennzeichnet, dass** das Getriebe (40) eine Klemmfiihrungskurve (45) und ein Eingriffsglied (33) aufweist, das mit der Klemmfiihrungskurve (45) in einem Klemmführungseingriff zusammenwirkt, in dem die hin- und hergehende Bewegung des Betätigungsorgans (35) die Bewegung der in Klemmrichtung (Z) beweglichen Klemmbacke (30) in und gegen die Klemmrichtung (Z) bewirkt, und die Klemmführungskurve (45) eine Neigung größer 0° und kleiner 90° zur Klemmrichtung (Z) und eine Neigung größer 0° und kleiner 90° zu einer Richtung (Y) der hin- und hergehenden Bewegung des Betätigungsorgans (35) aufweist.

9. Vorrichtung nach dem vorhergehenden Anspruch, **dadurch gekennzeichnet, dass** entweder eines der Getriebeglieder (41, 32) oder die erste Klemmbacke (20) oder vorzugsweise ein optional weiteres Getriebeglied (33) das im Klemmführungseingriff mit der Klemmführungskurve (45) zusammenwirkende Eingriffsglied (33) und dieses Eingriffsglied (33) relativ zu der zweiten Klemmbacke (30) vorzugsweise unbeweglich ist.

10. Vorrichtung nach einem der zwei vorhergehenden Ansprüche, **dadurch gekennzeichnet, dass** entweder eines der im Längsführungseingriff zusammenwirkenden Getriebeglieder (41, 32) oder ein optional weiteres Getriebeglied (33) oder die erste Klemmbacke (20), vorzugsweise das erste Getriebeglied (41), die Klemmführungskurve (45) aufweist, vorzugsweise an einer gegen die Klemmrichtung (Z) weisenden Rückseite oder in Klemmrichtung (Z) weisenden Unterseite.

11. Vorrichtung nach einem der vier vorhergehenden Ansprüche, **dadurch gekennzeichnet, dass** das Getriebe (40) eine Sequenzsteuerung bildet, die die Längsbewegung der zweiten Klemmbacke (30) von der Bewegung in Klemmrichtung (Z) separiert, so dass bei hin- und hergehender Bewegung des Betätigungsorgans (35) die Längsbewegung der zweiten Klemmbacke (30) und die Bewegung in Klemmrichtung (Z) nacheinander ausgeführt werden.

12. Vorrichtung nach einem der vorhergehenden Ansprüche, **dadurch gekennzeichnet, dass** die erste Klemmbacke (20) eine Eingriffsform (22, 23) aufweist, die breiter als jeweils die engeren Schlitzabschnitte (6) und in einen der breiteren Schlitzabschnitte (5) einführbar ist, um die erste Klemmbacke (20) an der Befestigungsstruktur (3) in Längsrichtung (X) formschlüssig zu fixieren.

13. Vorrichtung nach einem der vorhergehenden Ansprüche, **dadurch gekennzeichnet, dass** die Position der ersten Klemmbacke (20) relativ zur Basis (10) in Längsrichtung (X) oder Klemmrichtung (Z) oder in eine quer zu diesen beiden Richtungen (X, Z) weisende Querrichtung (Y) verstellbar und die erste Klemmbacke (20) in entsprechend unterschiedlichen Positionen relativ zur Basis (10) fixierbar ist, vorzugsweise mittels eines Verstellgetriebes (18, 25) mit einem an der Basis (10) abgestützten ersten Verstellglied (18) und einem an der ersten Klemmbacke (20) abgestützten zweiten Stellglied (25), das mit dem ersten Stellglied (18) in einem Verstelleingriff ist.

14. Vorrichtung nach einem der vorhergehenden Ansprüche, bei der die Befestigungsstruktur eine linke Befestigungsstruktur (1), die Klemmbacken linke Klemmbacken (20, 30) und das Getriebe ein linkes Getriebe (40) bilden, die Vorrichtung ferner umfassend:
g) eine neben der linken Befestigungsstruktur (1) erstreckte rechte Befestigungsstruktur (2), die ebenfalls einen in Längsrichtung (X) erstreckten Befestigungskanal (3) bildet, der sich längs eines Schlitzes (4) mit breiteren und demgegenüber engeren Schlitzabschnitten (5, 6) nach außen öffnet und von außen gesehen zumindest hinter jeweils den engeren Schlitzabschnitten (6) aufweitet, so dass wenigstens dort jeweils eine von außen hintergreifbare Kanalwand (7) erhalten wird,
h) eine an der Basis (10) abgestützte, in Klemmrichtung (Z) über dem Schlitz (4) der rechten Befestigungsstruktur (2) positionierbare, in die Klemmrichtung (Z) zur rechten Befestigungsstruktur (2) drückbare rechte erste Klemmbacke (20),
i) eine rechte zweite Klemmbacke (30) mit einem Klemmabschnitt (31), der durch einen oder mehrere der breiteren Schlitzabschnitte (5) in den Befestigungskanal (3) einführbar ist, und einem vom Klemmabschnitt (31) gegen die Klemmrichtung (Z) abragenden, im Vergleich zum Klemmabschnitt (31) schlankeren Schaft (32),
j) wobei die rechte zweite Klemmbacke (30) an der Basis (10) in Längsrichtung (X) hin und her beweglich abgestützt und im eingeführten Zustand während oder nach Ausführung einer Längsbewegung mit ihrem Klemmabschnitt (31) gegen die hintergreifbare Kanalwand (7) des rechten Befestigungskanals (3) drückbar ist, um die rechte Befestigungsstruktur (2) zwischen den rechten Klemmbacken (20, 30) zu klemmen und die Basis (10) dadurch an der rechten Befestigungsstruktur (2) zu befestigen,
k) ein rechtes Getriebe (40) zur Übertragung der Bewegung des Betätigungsorgans (35) in die Längsbewegung der rechten zweiten Klemmbacke (30),
l) und eine Kopplungseinrichtung, die mittels eines relativ zur Basis (10) hin und her beweglichen Kopplungsglieds (47, 48, 49) die linke zweite Klemmbacke (30) und die rechte zweite Klemmbacke (30), vorzugsweise das linke Getriebe (40) und das rechte Getriebe (40), miteinander koppelt, so dass die zweiten Klemmbacken (30) bei einer hin- und hergehenden Bewegung des Kopplungsglieds (47, 48, 49) jeweils eine hin- und hergehende Längsbewegung ausführen,
m) wobei die linken Klemmbacken (20, 30) vorzugsweise Klemmbacken entsprechend einem der anderen Ansprüche und das linke Getriebe (40) vorzugsweise ebenfalls ein Kurvengetriebe (40) entsprechend einem der anderen Ansprüche ist.

15. Vorrichtung nach dem vorhergehenden Anspruch, **dadurch gekennzeichnet, dass** das rechte Getriebe (40) ebenfalls ein erstes Getriebeglied (41) und ein zweites Getriebeglied (32) entsprechend dem linken Getriebe (40) aufweist, die in einem Längsführungseingriff zusammenwirken, um die Bewegung des Betätigungsorgans (35) in die Längsbewegung der zweiten Klemmbacke (30) umzuwandeln, und die Kopplungseinrichtung die ersten Getriebeglieder (41) in Bewegungsrichtung (Y) zug- und schubfest miteinander verbindet.

## Claims

1. Device for attaching a fitting to a fixing structure (1) of a vehicle, said fixing structure having a fixing channel (3) which extends in a longitudinal direction (X) and opens outward along a slot (4) having wider and, in relation thereto, narrower slot sections (5, 6) and, as seen from the outside, widens at least behind the narrower slot sections (6) in each case such that at least at this point a channel wall (7) which can be engaged behind from the outside is in each case obtained, the device comprising:
a) a base (10) with a first clamping jaw (20) which is positionable in a clamping direction (Z) over the slot (4) and is pressable in the clamping direction (Z) to the fixing structure (1),
b) a second clamping jaw (30) with a clamping section (31) which is introducible by one or more of the wider slot sections (5) into the fixing channel (3), and with a stem (32) which protrudes from the clamping section (31) counter to the clamping direction (Z) and is more slender than the clamping section (31),
c) wherein the second clamping jaw (30) is supported on the base (30) so as to be movable to and fro in the longitudinal direction (X) and, in the inserted state, is pressable during or after execution of a longitudinal movement with the clamping section (31) against the channel wall (7), which can be engaged behind, of the fixing channel (3) in order to clamp the fixing structure (1) between the clamping jaws (20, 30) and thereby to attach the base (10) to the fixing structure (1), **characterized by**
d) an actuating member (35) which is supported on the base (10) so as to be movable to and fro,
e) and a gearing (40) which couples the actuating member (35) to the second clamping jaw (30) and has a first gearing element (41) and a second gearing element (32), of which one (41) has a longitudinal guide cam (44) and the other (32) forms an engagement element interacting with the longitudinal guide cam (44) in a longitudinal guide engagement,
f) wherein the gearing elements (41, 32) are movable to and fro in a translatory manner relative to each other and in each case relative to the base (10) in the longitudinal guide engagement such that a movement of the actuating member (35) causes the longitudinal movement of the second clamping jaw (30).

2. Device according to the preceding claim, **characterized in that** a movement of the first gearing element (41) only in a translatory manner relative to the base (10) in the longitudinal guide engagement causes a movement of the second gearing element (32) only in a translatory manner relative to the base (10).

3. Device according to either of the preceding claims, **characterized in that** the first gearing element (41) is movable only in a translatory manner relative to the clamping jaws (20, 30) and the second gearing element (32) is movable only in a translatory manner relative to the first clamping jaw (20).

4. Device according to one of the preceding claims, **characterized in that** the second gearing element (32) is connected to the second clamping jaw (30) so as to be non-movable in directions (X, Y) pointing transversally with respect to the clamping direction (Z) and preferably also in the clamping direction (Z), or is formed in one piece with the second clamping jaw (30).

5. Device according to one of the preceding claims, **characterized in that** the actuating member (35) is supported on the base (10) so as to be movable to and fro in a translatory manner, preferably transversally with respect to the longitudinal direction (X) or clamping direction (Z), and is connected with regard to its translatory movability to the first gearing element (41) so as preferably to be tension-proof and shearing-proof.

6. Device according to one of the preceding claims, **characterized in that** the stem (32) of the second clamping jaw (30) projects beyond the longitudinal guide cam (44) in and counter to the clamping direction (Z), preferably protrudes the gearing element (41) having the longitudinal guide cam (44) in the region of the longitudinal guide cam (44) in the clamping direction (Z).

7. Device according to one of the preceding claims, **characterized in that** one of the clamping jaws (20, 30) is movable relative to the other, preferably the second clamping jaw (30) is movable relative to the base (10) and the first clamping jaw (20), in and counter to the clamping direction (Z) in order to clamp the fixing structure (1, 2) between the clamping jaws (20, 30), and the clamping jaw (30) which is movable in the clamping direction (Z) is coupled to the actuating member (35), preferably by means of the gearing (40), in such a manner that a movement of the actuating member (35) to and fro causes the movement of said clamping jaw (30) in and counter to the clamping direction (Z).

8. Device according to the preceding claim, **characterized in that** the gearing (40) has a clamping guide cam (45) and an engagement element (33) which interacts with the clamping guide cam (45) in a clamping guide engagement, in which the movement of the actuating member (35) to and fro causes the movement of the clamping jaw (30), which is movable in the clamping direction (Z), in and counter to the clamping direction (Z), and the clamping guide cam (45) has an inclination greater than 0° and smaller than 90° to the clamping direction (Z) and an inclination greater than 0° and smaller than 90° to a direction (Y) of the movement of the actuating member (35) to and fro.

9. Device according to the preceding claim, **characterized in that** either one of the gearing elements (41, 32) or the first clamping jaw (20) or, preferably, an optionally further gearing element (33), the engagement element (33) which interacts with the clamping guide cam (45) in the clamping guide engagement, and said engagement element (33) is preferably immovable relative to the second clamping jaw (30).

10. Device according to either of the two preceding claims, **characterized in that** either one of the gearing elements (41, 32) interacting in the longitudinal guide engagement or an optionally further gearing element (33) or the first clamping jaw (20), preferably the first gearing element (41), has the clamping guide cam (45), preferably on a rear side facing counter to the clamping direction (Z) or lower side facing in the clamping direction (Z).

11. Device according to one of the four preceding claims, **characterized in that** the gearing (40) forms a sequence controller which separates the longitudinal movement of the second clamping jaw (30) from the movement in the clamping direction (Z) such that, on a movement of the actuating member (35) to and fro, the longitudinal movement of the second clamping jaw (30) and the movement in the clamping direction (Z) are carried out one after the other.

12. Device according to one of the preceding claims, **characterized in that** the first clamping jaw (20) has an engagement shape (22, 23) which is wider than the narrower slot sections (6) in each case and is introducible into one of the wider slot sections (5) in order to fix the first clamping jaw (20) on the fixing structure (3) in a form-fitting manner in the longitudinal direction (X).

13. Device according to one of the preceding claims, **characterized in that** the position of the first clamping jaw (20) is adjustable relative to the base (10) in the longitudinal direction (X) or clamping direction (Z) or in a transverse direction (Y) pointing transversally with respect to said two directions (X, Z), and the first clamping jaw (20) is fixable in correspondingly different positions relative to the base (10), preferably by means of an adjustment gearing (18, 25) with a first adjustment element (18) supported on the base (10) and with a second adjustment element (25) which is supported on the first clamping jaw (20) and is in adjustment engagement with the first adjustment element (18).

14. Device according to one of the preceding claims, in which the fixing structure forms a left fixing structure (1), the clamping jaws form left clamping jaws (20, 30) and the gearing forms a left gearing (40), the device furthermore comprising:
g) a right fixing structure (2) which extends next to the left fixing structure (1) and likewise forms a fixing channel (3) which extends in the longitudinal direction (X) and opens outward along a slot (4) having wider and, in relation thereto, narrower slot sections (5, 6) and, as seen from the outside, widens at least behind the narrower slot sections (6) in each case such that at least at this point a channel wall (7) which can be engaged behind from the outside is in each case obtained,
h) a right first clamping jaw (20) which is supported on the base (10), is positionable in the clamping direction (Z) over the slot (4) of the right fixing structure (2) and is pressable in the clamping direction (Z) to the right fixing structure (2),
i) a right second clamping jaw (30) with a clamping section (31) which is introducible by one or more of the wider slot sections (5) into the fixing channel (3), and with a stem (32) which protrudes from the clamping section (31) counter to the clamping direction (Z) and is more slender than the clamping section (31),
j) wherein the right second clamping jaw (30) is supported on the base (10) so as to be movable to and fro in the longitudinal direction (X) and, in the inserted state, is pressable during or after execution of a longitudinal movement with its clamping section (31) against the channel wall (7), which can be engaged behind, of the right fixing channel (3) in order to clamp the right fixing structure (2) between the right clamping jaws (20, 30) and thereby to attach the base (10) to the right fixing structure (2),
k) a right gearing (40) for transferring the movement of the actuating member (35) into the longitudinal movement of the right second clamping jaw (30),
l) and a coupling device which, by means of a coupling element (47, 48, 49) which is movable to and fro relative to the base (10), couples the left second clamping jaw (30) and the right second clamping jaw (30), preferably the left gearing (40) and the right gearing (40), to each other such that, upon a movement of the coupling element (47, 48, 49) to and fro, the second clamping jaws (30) in each case execute a longitudinal movement to and fro,
m) wherein the left clamping jaws (20, 30) are preferably clamping jaws corresponding to one of the other claims, and the left gearing (40) is preferably likewise a cam gearing (40) corresponding to one of the other claims.

15. Device according to the preceding claim, **characterized in that** the right gearing (40) likewise has a first gearing element (41) and a second gearing element (32) corresponding to the left gearing (40), said gearing elements interacting in a longitudinal guide engagement in order to convert the movement of the actuating member (35) into the longitudinal movement of the second clamping jaw (30), and the coupling device connects the first gearing elements (41) to each other so as to be tension-proof and shearing-proof in the direction of movement (Y).

## Revendications

1. Dispositif pour la fixation d'un objet d'équipement sur une structure de fixation (1) d'un véhicule, laquelle structure de fixation présente un canal de fixation (3) s'étendant dans une direction longitudinale (X), lequel canal de fixation s'ouvre vers l'extérieur le long d'une fente (4) ayant des portions de fente plus larges et plus étroites par rapport à celles-ci (5, 6) et, vu depuis l'extérieur, s'élargit au moins derrière chacune des portions de fente plus étroites (6), de sorte qu'au moins à cet endroit soit obtenue à chaque fois une paroi de canal (7) pouvant être saisie par l'arrière depuis l'extérieur, le dispositif comprenant :
a) une base (10) avec une première mâchoire de serrage (20) pouvant être positionnée dans une direction de serrage (Z) par-dessus la fente (4), pouvant être pressée dans la direction de serrage (Z) par rapport à la structure de fixation (1),
b) une deuxième mâchoire de serrage (30) avec une portion de serrage (31), qui peut être introduite à travers une ou plusieurs des portions de fente plus larges (5) dans le canal de fixation (3), et avec une tige (32) plus longiligne par rapport à la portion de serrage (31), faisant saillie depuis la portion de serrage (31) à l'encontre de la direction de serrage (Z),
c) la deuxième mâchoire de serrage (30) étant supportée sur la base (10) dans la direction longitudinale (X) de manière déplaçable en va et vient et pouvant être pressée dans l'état introduit pendant ou après la réalisation d'un mouvement longitudinal avec la portion de serrage (31) contre la paroi de canal (7), pouvant être saisie par l'arrière, du canal de fixation (3), afin de serrer la structure de fixation (1) entre les mâchoires de serrage (20, 30) et de fixer la base (10) de ce fait à la structure de fixation (1),
**caractérisé par**
d) un organe d'actionnement (35) supporté sur la base (10) de manière déplaçable en va et vient,
e) et une transmission (40) accouplant l'organe d'actionnement (35) à la deuxième mâchoire de serrage (30), avec un premier organe de transmission (41) et un deuxième organe de transmission (32), dont l'un (41) présente une courbe de guidage longitudinal (44) et l'autre (32) forme un organe d'engagement coopérant avec la courbe de guidage longitudinal (44) dans un engagement de guidage longitudinal,
f) les organes de transmission (41, 32) étant déplaçables en engagement de guidage longitudinal l'un par rapport à l'autre et à chaque fois par rapport à la base (10) en translation en va et vient, de telle sorte qu'un mouvement de l'organe d'actionnement (35) provoque le mouvement longitudinal de la deuxième mâchoire de serrage (30).

2. Dispositif selon la revendication précédente, **caractérisé en ce qu'**un mouvement seulement de translation du premier organe de transmission (41) par rapport à la base (10) en engagement de guidage longitudinal provoque un mouvement seulement de translation du deuxième organe de transmission (32) par rapport à la base (10).

3. Dispositif selon l'une quelconque des revendications précédentes, **caractérisé en ce que** le premier organe de transmission (41) est déplaçable seulement en translation par rapport aux mâchoires de serrage (20, 30) et le deuxième organe de transmission (32) est déplaçable seulement en translation par rapport à la première mâchoire de serrage (20).

4. Dispositif selon l'une quelconque des revendications précédentes, **caractérisé en ce que** le deuxième organe de transmission (32) est connecté de manière non mobile à la deuxième mâchoire de serrage (30) dans des directions (X, Y) orientées transversalement à la direction de serrage (Z) et de préférence aussi dans la direction de serrage (Z), ou est formé d'une seule pièce avec la deuxième mâchoire de serrage (30).

5. Dispositif selon l'une quelconque des revendications précédentes, **caractérisé en ce que** l'organe d'actionnement (35) est supporté sur la base (10) en translation, de préférence transversalement à la direction longitudinale (X) ou à la direction de serrage (Z), de manière déplaçable en va et vient, et est connecté en termes de mobilité en translation au premier organe de transmission (41) de préférence de manière résistant à la traction et à la poussée.

6. Dispositif selon l'une quelconque des revendications précédentes, **caractérisé en ce que** la tige (32) de la deuxième mâchoire de serrage (30) fait saillie dans et à l'encontre de la direction de serrage (Z) au-delà de la courbe de guidage longitudinal (44), traverse de préférence l'organe de transmission (41) présentant la courbe de guidage longitudinal (44) dans la région de la courbe de guidage longitudinal (44) dans la direction de serrage (Z).

7. Dispositif selon l'une quelconque des revendications précédentes, **caractérisé en ce que** l'une des mâchoires de serrage (20, 30) est déplaçable par rapport à l'autre, de préférence la deuxième mâchoire de serrage (30) par rapport à la base (10) et la première mâchoire de serrage (20), dans et à l'encontre de la direction de serrage (Z), afin de serrer la structure de fixation (1, 2) entre les mâchoires de serrage (20, 30), et la mâchoire de serrage (30) déplaçable dans la direction de serrage (Z) est accouplée à l'organe d'actionnement (35) de telle sorte, de préférence au moyen de la transmission (40), qu'un mouvement de va et vient de l'organe d'actionnement (35) provoque le mouvement de cette mâchoire de serrage (30) dans et à l'encontre de la direction de serrage (Z).

8. Dispositif selon la revendication précédente, **caractérisé en ce que** la transmission (40) présente une courbe de guidage de serrage (45) et un organe d'engagement (33) qui coopère avec la courbe de guidage de serrage (45) en engagement de guidage de serrage, dans lequel le mouvement de va et vient de l'organe d'actionnement (35) provoque le mouvement de la mâchoire de serrage (30) déplaçable dans la direction de serrage (Z) dans et à l'encontre de la direction de serrage (Z), et la courbe de guidage de serrage (45) présente une inclinaison supérieure à 0° et inférieure à 90° par rapport à la direction de serrage (Z) et une inclinaison supérieure à 0° et inférieure à 90° par rapport à une direction (Y) du mouvement de va et vient de l'organe d'actionnement (35).

9. Dispositif selon la revendication précédente, **caractérisé en ce que** soit l'un des organes de transmission (41, 32) soit la première mâchoire de serrage (20) soit de préférence un organe de transmission optionnel supplémentaire (33), l'organe d'engagement (33) coopérant en engagement de guidage de serrage avec la courbe de guidage de serrage (45), et cet organe d'engagement (33) est de préférence immobile par rapport à la deuxième mâchoire de serrage (30).

10. Dispositif selon l'une quelconque des deux revendications précédentes, **caractérisé en ce que** soit l'un des organes de transmission (41, 32) coopérant en engagement de guidage longitudinal soit un organe de transmission optionnel supplémentaire (33) soit la première mâchoire de serrage (20), de préférence le premier organe de transmission (41), présente la courbe de guidage de serrage (45), de préférence au niveau d'un côté arrière tourné à l'encontre de la direction de serrage (Z) soit un côté inférieur tourné dans la direction de serrage (Z).

11. Dispositif selon l'une quelconque des revendications précédentes, **caractérisé en ce que** la transmission (40) forme une commande séquentielle, qui sépare le mouvement longitudinal de la deuxième mâchoire de serrage (30) du mouvement dans la direction de serrage (Z), de sorte que lors du mouvement de va et vient de l'organe d'actionnement (35), le mouvement longitudinal de la deuxième mâchoire de serrage (30) et le mouvement dans la direction de serrage (Z) soient effectués l'un après l'autre.

12. Dispositif selon l'une quelconque des revendications précédentes, **caractérisé en ce que** la première mâchoire de serrage (20) présente une forme d'engagement (22, 23) qui est plus large que les portions de fente plus étroites (6) respectives, et qui peut être introduite dans l'une des portions de fente plus larges (5), afin de fixer par engagement par coopération de forme la première mâchoire de serrage (20) sur la structure de fixation (3) dans la direction longitudinale (X).

13. Dispositif selon l'une quelconque des revendications précédentes, **caractérisé en ce que** la position de la première mâchoire de serrage (20) par rapport à la base (10) est réglable dans la direction longitudinale (X) ou la direction de serrage (Z) ou dans une direction transversale (Y) orientée transversalement à ces deux directions (X, Y) et la première mâchoire de serrage (20) peut être fixée par rapport à la base (10) dans des positions différentes correspondantes par rapport à la base (10), de préférence au moyen d'un mécanisme de réglage (18, 25), avec un premier organe de réglage (18) supporté sur la base (20) et un deuxième organe de réglage (25) supporté sur la première mâchoire de serrage (20), lequel deuxième organe de réglage est en engagement de réglage avec le premier organe de réglage (18).

14. Dispositif selon l'une quelconque des revendications précédentes, dans lequel la structure de fixation forme une structure de fixation gauche (1), les mâchoires de serrage forment des mâchoires de serrage gauches (20, 30) et la transmission forme une transmission gauche (40), le dispositif comprenant en outré :
g) une première structure de fixation (2) droite s'étendant à côté de la structure de fixation gauche (1), laquelle forme également un canal de fixation (3) s'étendant dans la direction longitudinale (X), lequel canal de fixation s'ouvre vers l'extérieur le long d'une fente (4) ayant des portions de fente (5, 6) plus larges et plus étroites par rapport à celles-ci, et s'élargissant, vu depuis l'extérieur, au moins derrière chacune des portions de fente plus étroites (6), de sorte qu'au moins à cet endroit une paroi de canal (7) pouvant être saisie par l'arrière depuis l'extérieur soit obtenue,
h) une première mâchoire droite (20) supportée sur la base (10), pouvant être positionnée dans la direction de serrage (Z) par-dessus la fente (4) de la structure de fixation droite (2), pouvant être pressée dans la direction de serrage (Z) vers la structure de fixation droite (2),
i) une deuxième mâchoire de serrage droite (30) avec une portion de serrage (31), qui peut être introduite à travers une ou plusieurs des portions de fente plus larges (5) dans le canal de fixation (3), et avec une tige (32) plus longiligne par rapport à la portion de serrage (31), faisant saillie depuis la portion de serrage (31) à l'encontre de la direction de serrage (Z),
j) la deuxième mâchoire de serrage droite (30) s'appuyant sur la base (10) dans la direction longitudinale (X) de manière déplaçable en va et vient et pouvant être pressée dans l'état introduit pendant ou après la réalisation d'un mouvement longitudinal avec sa portion de serrage (31) contre la paroi de canal (7), pouvant être saisie par l'arrière, du canal de fixation (3), afin de serrer la structure de fixation droite (2) entre les mâchoires de serrage droites (20, 30) et de fixer la base (10) de ce fait sur la structure de fixation droite (2),
k) une transmission droite (40) pour le transfert du mouvement de l'organe d'actionnement (35) en le mouvement longitudinal de la deuxième mâchoire de serrage droite (30),
l) et un dispositif d'accouplement, qui accouple l'une à l'autre au moyen d'un organe d'accouplement (47, 48, 49) déplaçable en va et vient par rapport à la base (10), la deuxième mâchoire de serrage gauche (30) et la deuxième mâchoire de serrage droite (30), de préférence la transmission gauche (40) et la transmission droite (40), de sorte que les deuxième mâchoires de serrage (30) effectue lors d'un mouvement en va et vient de l'organe d'accouplement (47, 48, 49) à chaque fois un mouvement longitudinal en va et vient,
m) les mâchoires de serrage gauches (20, 30) étant de préférence des mâchoires de serrage correspondant à l'une des autres revendications et la transmission gauche (40) étant de préférence également une transmission par courbe (40) correspondant à l'une des autres revendications.

15. Dispositif selon la revendication précédente, **caractérisé en ce que** la transmission droite (40) présente également un premier organe de transmission (41) et un deuxième organe de transmission (32) correspondant à la transmission gauche (40), lesquels coopèrent dans un engagement de guidage longitudinal, afin de convertir le mouvement de l'organe d'actionnement (35) en le mouvement longitudinal de la deuxième mâchoire de serrage (30) et le dispositif d'accouplement relie l'un à l'autre les premiers organes de transmission (41) de manière résistant à la traction et à la poussée dans la direction de déplacement (Y).
